Europäisches Patentamt

European Patent Office

Office européen des brevets

(11) Numéro de publication: **0 323 362 B1**

## FASCICULE DE BREVET EUROPEEN

(45) Date de publication de fascicule du brevet: **16.12.92** (51) Int. Cl.5: **H04N 11/04**

(21) Numéro de dépôt: **88403374.7**

(22) Date de dépôt: **30.12.88**

(54) **Procédé adaptatif de codage et de décodage d'une suite d'images par transformation, et dispositifs pour la mise en oeuvre de ce procédé.**

(30) Priorité: **30.12.87 FR 8718371**

(43) Date de publication de la demande:
**05.07.89 Bulletin 89/27**

(45) Mention de la délivrance du brevet:
**16.12.92 Bulletin 92/51**

(84) Etats contractants désignés:
**AT CH DE ES GB IT LI NL SE**

(56) Documents cités:
EP-A- 0 084 270      EP-A- 0 189 703
FR-A- 2 589 020      US-A- 4 394 774
US-A- 4 447 886      US-A- 4 672 441

NATIONAL TELECOMMUNICATIONS CONFE-
RENCE, Houston, 30 novembre - 4 décembre
1980, vol. 2, pages 36.3.1-36.3.4, IEEE, New
York, US; A.G. TESCHER: "Adaptive transform coding of color images at low rates"

PHILIPS TECHNICAL REVIEW, vol. 38, no. 4/5,
1978/1979, pages 119-130; H. BACCHI et al.:
"Real-time orthogonal transformation of
colour-television pictures"

(73) Titulaire: **THOMSON GRAND PUBLIC**
**74, rue du Surmelin**
**F-75020 Paris(FR)**

(72) Inventeur: **Auvray, Eric**
**THOMSON-CSF SCPI 19, avenue de Messine**
**F-75008 Paris(FR)**
Inventeur: **Perron, Claude**
**THOMSON-CSF SCPI 19, avenue de Messine**
**F-75008 Paris(FR)**
Inventeur: **Ferre, Alain**
**THOMSON-CSF SCPI 19, avenue de Messine**
**F-75008 Paris(FR)**

(74) Mandataire: **Sciaux, Edmond et al**
**THOMSON-CSF SCPI**
**F-92045 PARIS LA DEFENSE CEDEX 67(FR)**

**Description**

L'invention concerne un procédé adaptatif de codage et de décodage d'une suite d'images par transformation, et des dispositifs pour la mise en oeuvre de ce procédé. Un tel procédé a pour but de réduire la quantité d'informations à transmettre, ou à stocker, lorsque des images ont été numérisées. Il est applicable, par exemple, aux systèmes de transmission vidéo numériques ou aux magnétoscopes numériques.

Il est connu de coder une image numérisée en mettant en oeuvre une transformation bidimensionnelle, de type cosinus, ou Fourier, ou Hadamard, ou Haar, ou Karhunen-Loeve. Un tel codage consiste à : diviser chaque image en blocs d'éléments d'image, chaque élément d'image étant représenté par une valeur numérique qui est la valeur de sa luminance ou d'une différence de couleur ; appliquer la transformation à chaque bloc pour obtenir une matrice de valeurs appelées coefficients de transformation du bloc ; et à transmettre ces coefficients de transformation sous une forme codée, par exemple par un code de Huffmann. Le décodage consiste ensuite à : décoder les mots de code de Huffmann pour obtenir les coefficients de transformation ; puis à restituer les valeurs numériques représentant chaque élément d'image en appliquant, aux coefficients de transformation correspondant à un bloc d'éléments d'image, la transformation bidimensionnelle inverse de celle utilisée pour le codage. Les transformations utilisées en pratique sont des transformations pour lesquelles il existe des algorithmes rapides, par exemple la transformation cosinus.

La demande de brevet français FR-A-2 575 351 décrit un procédé adaptatif de codage et de décodage consistant à :

- diviser chaque image en blocs d'éléments d'image ;
- appliquer la transformation cosinus à chaque bloc, celui-ci étant représenté par un bloc de valeurs de luminance, pour obtenir un bloc de coefficient de transformation ;
- déterminer, pour chaque bloc, s'il représente une scène très animée ou peu animée ;
- transmettre la valeur des coefficients de transformation du bloc si celui-ci représente une scène très animée, ou bien transmettre les différences de valeur de ces coefficients par rapport aux coefficients du bloc homologue dans l'image précédente, si le bloc représente une scène peu animée ;
- transmettre une information indiquant le type de codage utilisé pour chaque bloc, ces deux types de codage étant appelés respectivement codage intra-image et codage inter-images. Les coefficients ou les différences de coefficients sont transmis sous la forme de mots de code de Huffmann.

Selon ce procédé connu, le décodage consiste, avant d'appliquer la transformation inverse, à déterminer une valeur des coefficients de transformation de chaque bloc représentant une scène peu animée, en additionnant la différence de valeur de chacun de ses coefficients respectivement à la valeur des coefficients du bloc homologue dans l'image précédente.

Selon ce procédé connu, le codage consiste en outre à appliquer une pondération aux valeurs des coefficients ou aux valeurs des différences de coefficients, avec un poids plus grand pour les coefficients ou les différences de coefficients correspondant aux basses fréquences spatiales de l'image, par rapport aux coefficients ou aux différences de coefficients correspondant aux hautes fréquences spatiales de l'image ; et à quantifier selon une échelle linéaire les coefficients et les différences de coefficients pondérés. Le pas de quantification est variable en fonction de la quantité d'informations à transmettre. Ceci équivaut à multiplier tous les coefficients ou toutes les différences de coefficients de transformation d'un bloc, par un même coefficient dit de quantification, variable en fonction de la quantité d'informations pàtransmettre pour les blocs d'éléments d'image codés avant le bloc considéré ; et à ne conserver que la partie entière du résultat de la multiplication.

Les informations à transmettre sont stockées dans une mémoire tampon permettant une transmission à débit constant. Un dispositif de régulation fournit une valeur du coefficient de quantification qui diminue continûment lorsque la mémoire tampon se remplit et qui augmente continûment lorsque la mémoire tampon se vide.

Naturellement, le décodage consiste en outre à multiplier chaque valeur de coefficient transmise ou chaque valeur de différence de coefficients transmise, par un coefficient égal à l'inverse du coefficient de pondération utilisé pour le codage ; et à la multiplier ensuite par un coefficient égal à l'inverse du coefficient de quantification utilisé pour le codage.

Lorsqu'une suite d'images représente une scène très animée, la quantité d'informations à transmettre est importante, par conséquent le coefficient de quantification est petit pour réduire l'amplitude des valeurs des coefficients ou des différences de coefficients de transformation à transmettre. D'autre part, les coefficients de pondération donnent plus de poids aux coefficients de transformation correspondant aux basses fréquences spatiales de l'image afin de transmettre les informations essentielles de l'image en sacrifiant des informations moins essentielles qui correspondent aux hautes fréquences spatiales de l'image.

Lorsque la suite d'images représente une scène peu animée ou fixe, le codage de chaque bloc est de type inter-images pour exploiter la corrélation existant entre les images successives. D'une image à la suivante, les valeurs des différences de coefficients de transformation de blocs homologues ont une amplitude décroissante, la quantité d'informations à transmettre tend à diminuer. La régulation réagit alors en augmentant le coefficient de quantification. D'autre part, les informations restant à transmettre ne concernent plus les basses fréquences spatiales de l'image car elles ont été favorisées par la pondération et ont donc été transmises. Les informations restant à transmettre ne concernent que les hautes fréquences spatiales de l'image et celles-ci sont alors transmises avec une quantité d'informations importantes. Après un intervalle de temps correspondant à quelques images, la totalité des informations représentant une scène fixe sont donc transmises et permettent de restituer la scène avec une très bonne fidélité.

Pour le codage et le décodage d'images de télévision en couleur, le document cité précédemment suggère de traiter en parallèle trois suites de valeurs numériques correspondant à un signal de luminance et à deux signaux de différences de couleur, respectivement.

Ce procédé connu comporte deux inconvénients : le fait de traiter en parallèle ces trois suites de valeurs numériques conduit à utiliser trois mémoires tampons qui doivent restituer des informations codées avec des débits ayant des rapports constants car le canal de transmission a un débit constant. Or, les débits d'informations correspondant à un signal de luminance et à deux signaux de différence de couleur ont des rapports extrêmement variables parce que la saturation des couleurs est très variable et peut même être nulle dans le cas d'images ne comportant que des blancs, des gris, et des noirs. Le fait d'imposer un rapport constant entre ces trois débits d'information conduit en pratique à augmenter inutilement la quantité d'informations transmises, ou bien à sacrifier une partie des informations correspondant aux différences de couleur, ce qui nuit à la fidélité de la restitution.

Un autre inconvénient découle de la régulation mise en oeuvre dans ce procédé. Lorsque, dans une même image, il y a une succession de blocs codés par un codage inter-images, la quantité d'informations à transmettre étant faible, la régulation réagit en augmentant le coefficient de quantification et tend à maintenir un remplissage de la mémoire tampon. Si un bloc isolé, ou quelques blocs sont à coder ensuite par un codage intra-image, parce qu'ils correspondent à une zone limitée qui est en mouvement, il est soudainement nécessaire de transmettre de grosses quantités d'informations. La mémoire tampon étant maintenue pratiquement pleine, la régulation ne peut réagir qu'en sacrifiant une grande partie des informations à transmettre, c'est-à-dire en diminuant brutalement le coefficient de quantification quand la mémoire tampon approche de la saturation. Dans un tel cas, les blocs d'éléments d'image codés par le codage inter-image sont restitués avec une excellente fidélité alors que les blocs voisins, codés par un codage intra-image sont restitués avec une fidélité médiocre. La différence de qualité est alors très perceptible car ces deux types de blocs sont voisins dans une même image.

Le but de l'invention est de remédier à ces deux inconvénients du procédé connu. L'objet de l'invention est un procédé de codage adaptatif consistant notamment à stocker dans une même mémoire tampon les informations à transmettre correspondant aux valeurs de luminance et aux valeurs des deux signaux de différence de couleur, et consistant à utiliser des coefficients de pondération et des coefficients de quantification identiques, à une constante près, pour les coefficients de transformation ou les différences de coefficients de transformation correspondant à ces trois types de signaux.

Selon une autre caractéristique, le procédé selon l'invention consiste à utiliser des coefficients de pondération qui, en plus de donner un plus grand poids aux informations correspondant aux basses fréquences spatiales de l'image, sont variables aussi en fonction de la quantité d'informations à transmettre, de façon à réduire encore plus le poids donné aux informations correspondant aux hautes fréquences spatiales de l'image, lorsque le remplissage de la mémoire tampon augmente et se rapproche du maximum.

Selon une autre caractéristique du procédé selon l'invention, le coefficient de quantification est variable en fonction du taux de remplissage de la mémoire tampon, mais avec une discontinuité correspondant à un seuil de remplissage fixé, de façon à être constant en dessous de ce seuil de remplissage et de façon à augmenter lorsque le remplissage augmente au dessus de ce seuil.

Selon l'invention, un procédé adaptatif de codage et de décodage d'une suite d'images par transformation, le codage consistant à :

- diviser chaque image en blocs d'éléments d'image, chaque bloc étant représenté par un bloc de valeurs de luminance, un bloc de valeurs de différence de couleur bleue, et un bloc de valeurs de différence de couleur rouge ;
- appliquer une transformation bidimensionnelle à chaque bloc de valeurs, pour obtenir un bloc de coefficients de transformation du bloc de valeurs considéré ;

- transmettre, pour chaque bloc de valeurs, soit la valeur des coefficients de transformation du bloc, soit la différence de valeur de ces coefficients de transformation, par rapport à la valeur des coefficients de transformation d'un bloc homologue dans l'image précédant l'image en cours de codage, de façon à minimiser la quantité d'informations à transmettre pour le bloc considéré, le codage étant dit intra-image ou inter-images respectivement ;

- multiplier chaque coefficients de transformation ou chaque différence de coefficients de transformation, par un coefficient, dit de pondération, fonction du rang de ce coefficient de transformation ou de cette différence de coefficients de transformation;

- réguler le débit des informations transmises, en stockant dans une même mémoire tampon, les informations à transmettre correspondant aux trois types de blocs de valeurs, et en multipliant les coefficients de transformation et les différences de coefficients de transformation des 3 types de blocs, par un coefficient, dit de quantification, variable en fonction de la quantité d'informations à transmettre ;

le décodage consistant pour chaque bloc, à :

- multiplier chaque valeur transmise de coefficient de transformation ou chaque valeur transmise de différence de coefficients de transformation, par un coefficient égal à l'inverse du coefficient de pondération utilisé pour le codage et par un coefficient égal à l'inverse du coefficient de quantification utilisé pour le codage ;

- additionner, à la valeur de chaque différence de coefficients de transformation, la valeur d'un coefficient de transformation, homologue du coefficient considéré dans un bloc homologue du bloc considéré et appartenant à l'image précédant l'image en cours de décodage ;

- appliquer à chaque coefficient de transformation une transformation inverse de la transformation appliquée pour le codage, pour obtenir un bloc de valeurs représentant une portion d'image décodée ;

est caractérisé en ce que, pour réguler le débit, le coefficient de pondération est variable aussi en fonction de la quantité d'informations à transmettre, de façon à réduire le poids donné aux coefficients et aux différences de coefficients correspondant aux fréquences spatiales élevées, lorsque la quantité d'informations à transmettre augmente.

- la figure 1 représente l'ordre de balayage des coefficients de transformation ou des différences de coefficients de transformation d'un bloc d'éléments d'images, dans un exemple de mise en oeuvre du procédé selon l'invention ;

- la figure 2 représente un graphe illustrant une pondération réalisée dans cet exemple de mise en oeuvre ;

- la figure 3 représente un graphe illustrant une quantification réalisée dans cet exemple de mise en oeuvre ;

- les figures 4 à 6 illustrent la régulation du débit des informations transmises, dans cet exemple de mise en oeuvre ;

- les figures 7 et 8 illustrent la mise en oeuvre d'une variante du procédé selon l'invention ;

- la figure 9 représente les signaux de synchronisation d'un codeur et d'un décodeur, dans un exemple de mise en oeuvre du procédé selon l'invention ;

- les figures 10 et 11 représentent le schéma synoptique d'un exemple de réalisation d'un dispositif de codage pour la mise en oeuvre du procédé selon l'invention ;

- les figures 12 et 13 représentent le schéma synoptique d'un exemple de réalisation d'un dispositif de décodage pour la mise en oeuvre du procédé selon l'invention.

Dans un exemple de mise en oeuvre, la suite d'images est constituée par une suite de trames de télévision en couleur, échantillonnées et numérisées. Chaque élément d'image est représenté par une valeur de luminance, une valeur de différence de couleur rouge et une valeur de différence de couleur bleue, chacune de ces valeurs ayant huit bits. L'échantillonnage de la luminance a une fréquence de 10,125 MHz alors que l'échantillonnage de chacun des signaux de différence de couleur a une fréquence de 5,0625 MHz. Le débit des informations codées est constant et de l'ordre de 10 Mbits par seconde.

Chaque image de télévision à coder est constituée par deux trames entrelacées analysées d'une manière classique par une caméra de télévision. Chaque trame est codée séparemment.

Dans cet exemple de mise en oeuvre la transformation utilisée est la transformation cosinus. Elle est appliquée sur des blocs de 16 x 16 valeurs de luminance, des blocs de 16 x 8 valeurs de différence de couleur rouge, et des blocs de 16 x 8 valeurs de différence de couleur bleue. Toute autre transformation bidimensionnelle connue peut être utilisée pour la mise en oeuvre du procédé selon l'invention. La transformation est appliquée parallèlement à chacun de ces 3 types de bloc. Pour chaque bloc de valeur elle fournit une matrice de valeurs appelées coefficients de transformation du bloc de valeurs considéré. Le bloc de coefficients de transformation a des dimensions identiques aux dimensions du bloc à transformer. Les coefficients de transformation ont des valeurs réelles.

Les coefficients de transformation des valeurs de luminance f(i,j) sont calculés selon la formule :

$$F(u,v) = \sum_{i=0}^{15} \sum_{j=0}^{15} f(i,j).c(u).c(v).\cos\frac{(2i+1).u.\pi}{32}.\cos\frac{2(j+1).v.\pi}{32} \quad (1)$$

$$\text{où } c(u) = 1/\sqrt{2} \quad \text{si } u = 0$$
$$c(u) = 1 \quad \text{si } u \neq 0$$

Les coefficients de transformation des valeurs de différence de couleur f'(i,j) sont calculés selon la formule :

$$F'(u,v) = \sum_{i=0}^{15} \sum_{j=0}^{7} f'(i,j).c(u).c(v).\cos\frac{(2i+1).u.\pi}{32}.\cos\frac{(2j+1).v.\pi}{16} \quad (2)$$

i et j sont respectivement l'indice de ligne et l'indice de colonne dans le bloc des valeurs à coder ; u et v sont respectivement les indices de ligne et de colonne des coefficients de transformation dans le bloc de ces coefficients. Le coefficient de transformation situé dans la première colonne et sur la première ligne est égal à deux fois la valeur moyenne des coefficients d'un bloc de coefficients de transformation. Il a une valeur qui est toujours positive. Cette valeur doit être codée avec le plus de précision possible car la moindre erreur sur ce coefficient de transformation se traduit par une différence très visible entre un bloc d'éléments d'image et les blocs voisins.

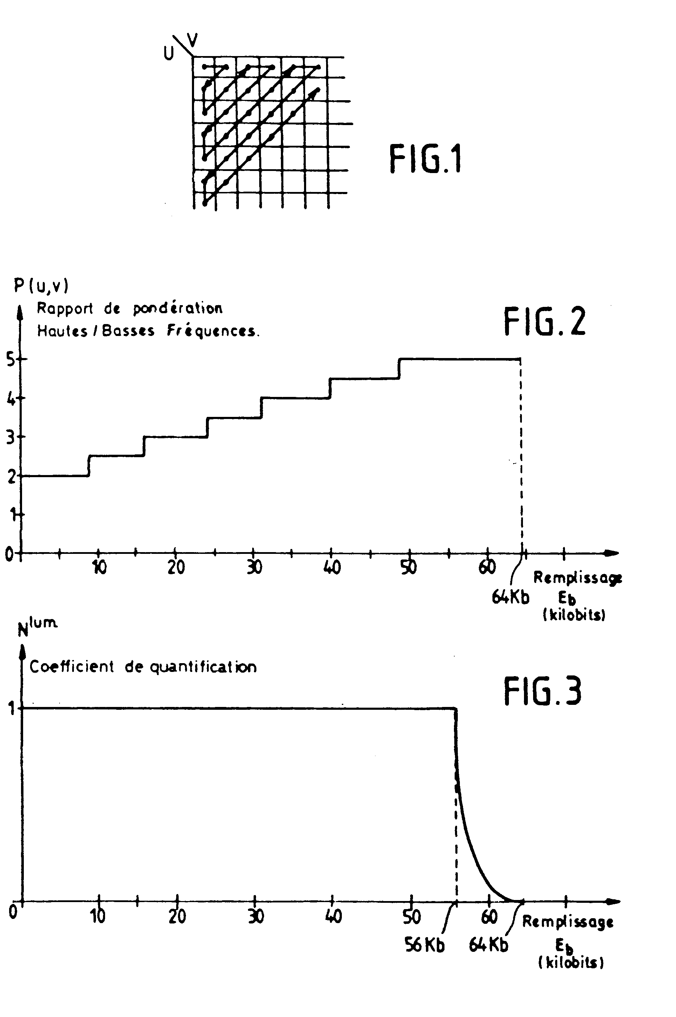

Les autres coefficients d'un bloc de transformation correspondent à des fréquences spatiales de l'image qui sont croissantes lorsque u et v croissent. Pour les valeurs de u et v les plus élevées, les coefficients de transformation sont généralement nuls. Dans la suite, les coefficients d'un bloc de coefficients de transformation sont considérés selon un ordre de balayage qui est représenté graphiquement sur la figure 1 et qui correspond à des valeurs croissantes de la somme $u^2 + v^2$. Le chemin de balayage des coefficients de transformation est choisi de façon à optimiser le taux de compression pour le type d'image qui est à coder, en fonction de leurs caractéristiques statistiques.

La mise en oeuvre du procédé selon l'invention consiste ensuite à réaliser parallèlement un codage dit inter-images et un codage dit intra-image pour chaque type de valeur à coder : valeur de luminance, valeur de différence de couleur bleue, et valeur de différence de couleur rouge. Le codage inter-images consiste à calculer la différence de valeur entre les coefficients de transformation d'un bloc d'éléments d'image considéré, respectivement par rapport aux coefficients de transformation d'un bloc homologue du bloc considéré, dans l'image précédant l'image en cours de codage. Le codage intra-image consiste à utiliser directement la valeur des coefficients de transformation du bloc. Dans les deux cas, le procédé de codage consiste ensuite à appliquer une pondération, une quantification, puis un codage de Huffmann.

En général, le codage intra-image d'un bloc représentant une portion d'image animée nécessite une plus grande quantité d'informations que le codage inter-image. Réciproquement, le codage inter-image d'un bloc représentant une portion d'image fixe nécessite en général moins d'informations que le codage intra-image. Le choix du type de codage est commun pour les trois types de signal à coder. Dans cet exemple de mise en oeuvre, le choix du type de codage consiste à déterminer exactement les quantités d'informations nécessaires respectivement dans les deux cas pour un même bloc de valeurs numériques à coder. Chaque quantité d'informations est calculée en comptant le nombre de bits de données codées fournis par la suite d'opérations suivantes : pondération, quantification, codage de Huffmann. Le procédé consiste ensuite à transmettre les données fournies par le codage nécessitant la plus petite quantité d'informations.

La pondération permet d'exploiter le fait qu'une suppression d'informations codant certains coefficients

5

de transformation d'un bloc d'éléments d'image n'entraîne pas beaucoup de dégradations sur l'image décodée. Les coefficients correspondant aux basses fréquences spatiales de l'image sont plus sensibles aux suppressions d'information que les coefficients correspondant aux hautes fréquences spatiales de l'image. La pondération est telle que les coefficients correspondant aux basses fréquences spatiales sont favorisés. Elle consiste à multiplier la valeur des coefficients ou des différences de coefficients de transformation d'un bloc par un coefficient de pondération qui est donné, pour la luminance, par la formule suivante :

$$P^{lum}(u,v) = \exp\left[-\frac{R.u^2+v^2}{Pon^2.Nor}\right] \qquad (3)$$

où u et v sont respectivement l'indice de colonne et de ligne du coefficient ou de la différence de coefficients auquel s'applique la pondération ; où R est une constante qui dépend de la taille du bloc et de la fréquence d'échantillonnage de l'image, sa valeur étant de 1,4 pour une fréquence d'échantillonnage de 10,125 MHz et pour une taille de bloc 16 x 16 ; où Nor est un paramètre constant mais fonction de R et qui est donné par la formule suivante :

$$Nor = \frac{2x16^2}{Rx16^2+16^2} \qquad (4)$$

Nor = 0,42 pour une fréquence d'échantillonnage de 10,125 MHz ;

et où Pon est un paramètre variable qui définit la sévérité de la pondération. Sa valeur est fonction du remplissage de la mémoire tampon stockant les informations codées à transmettre, correspondant aux trois types de signal représentatifs des éléments d'image. Ces informations sont celles correspondant aux blocs précédant le bloc d'éléments d'image en cours de codage. Le nombre de bits considéré est celui obtenu après le codage de Huffmann des valeurs non nulles, le codage par plages des valeurs nulles, et après l'insertion de mots séparateurs de données. La sévérité de la pondération est une fonction croissante du remplissage de la mémoire tampon, pour s'opposer à ce remplissage.

Dans cet exemple de mise en oeuvre, la capacité de la mémoire tampon est de 64 kilobits. La valeur du paramètre Pon, et le rapport de pondération obtenu, entre les hautes et les basses fréquences spatiales de l'image, sont donnés dans le tableau ci-dessus :

| Remplissage de la mémoire tampon | Valeur du paramètre Pon | Valeur obtenue pour le rapport de pondération hautes/basses fréquences |
|---|---|---|
| 64 à 48 Kb | 18 | 5 |
| 48 à 40 Kb | 18,5 | 4,5 |
| 40 à 32 Kb | 19 | 4 |
| 32 à 24 Kb | 20 | 3,5 |
| 24 à 16 Kb | 22 | 3 |
| 16 à 8 Kb | 24 | 2,5 |
| 8 à 0 Kb | 27 | 2 |

La valeur des coefficients ou des différences de coefficients de transformation pour les signaux de différence de couleur, est pondérée par un coefficient donné par la formule :

$$P^{ch}(u,v) = \exp -\left[\frac{R'.(\frac{u}{2}+1)^2 + v^2}{Pon^2.Nor'}\right] \qquad (5)$$

où $R'$ est une constante qui dépend de la taille du bloc et de la fréquence d'échantillonnage pour le signal de différence de couleur et qui est égale à 0,7 pour des blocs 16 x 8 et pour une fréquence d'échantillonnage de 5,0625 MHz ; et où Nor' est une constante qui est donnée par la formule suivante :

$$Nor' = \frac{2 \times 16^2}{R' \times 16^2 + 16^2} \quad (6)$$

Nor' = 0,59 pour une fréquence d'échantillonnage de 5,0625 MHz.

Le coefficient de pondération $P^{ch}(u,v)$ est fonction, lui aussi, du remplissage de la mémoire tampon, par l'intermédiaire de la variable Pon, pour participer au processus de régulation du débit des informations codées transmises. Le coefficient de pondération est le même pour les données codées par le codage inter-images et pour celles codées par le codage intra-image.

Le processus de régulation consiste en outre à multiplier la valeur du coefficient ou des différences de coefficients de transformation d'un bloc par un coefficient de quantification qui est fonction du remplissage de la mémoire tampon, celle-ci contenant des données codées correspondant aux blocs précédant le bloc en cours de codage.

L'opération de quantification est réalisée parallèlement sur les coefficients de transformation obtenus par le codage intra-image et sur les différences de coefficients de transformation obtenues par le codage inter-images, après l'opération de pondération. Pour un bloc d'éléments d'image donné, tous les coefficients et toutes les différences de coefficients de transformation correspondant à la luminance sont multipliés par une même valeur de coefficients de quantification. Tous les coefficients et toutes les différences de coefficients de transformation correspondant aux deux signaux de différence de couleur sont multipliés par un coefficient de pondération qui a la même valeur que celui correspondant à la luminance, à une constante multiplicative près. Cette constante est égale à 1,41 pour compenser une constante multiplicative introduite au cours du calcul des transformées cosinus et qui est légèrement différente pour des blocs de tailles différentes, comme c'est le cas pour la luminance d'une part et pour les différences de couleur d'autre part.

Le coefficient de quantification est constant pour un remplissage $E_b$ de la mémoire tampon, inférieur à une valeur de seuil ; et il est décroissant exponentiellement lorsque le remplissage $E_b$ est supérieur à cette valeur de seuil. Dans cet exemple, où la capacité de la mémoire tampon est égale à 64000 bits, la valeur de seuil du remplissage est prise égale à 56000 bits. Pour la luminance, le coefficient de quantification est donné par la formule suivante :

$$N^{lum} = \exp\left(- \frac{E_b - 56000}{Nor}\right) \quad si \; E_b \geqslant 56000 \; bits \quad (7)$$

$$N^{lum} = 1 \; si \; E_b \leqslant 56000 \; bits$$

Pour les signaux de différence de couleur, le coefficient de quantification est donné par la formule suivante :

$$N^{chr} = 1,41 . \exp\left(- \frac{E_b - 56000}{Nor'}\right) \quad si \; E_b \geqslant 56000 \; bits \quad (8)$$

$$N^{chr} = 1,41 \; si \; E_b \leqslant 56000 \; bits$$

où les constantes Nor et Nor' ont les valeurs définies précédemment.

Les valeurs des coefficients ou des différences de coefficients de transformation sont tronquées après la pondération et la quantification, pour les arrondir à la valeur entière la plus proche.

La figure 2 représente le graphe du rapport entre le coefficient de pondération appliqué aux hautes fréquences et le coefficient de pondération appliqué aux basses fréquences spatiales de l'image, pour la luminance, en fonction du remplissage $E_b$ de la mémoire tampon. Il est croissant par paliers, quand le remplissage varie de 0 à 64 Kbits.

La figure 3 représente le graphe du coefficient de quantification $N^{lum}$, correspondant à la luminance, en fonction du remplissage $E_b$. Sur ce graphe il apparaît clairement que le coefficient de quantification est constant pour la plupart des valeurs du remplissage et qu'il décroît très rapidement lorsque le remplissage est proche de son maximum. La relation entre le coefficient de quantification et le remplissage, dans le procédé selon l'invention, est donc nettement différente de celles utilisées classiquement et qui varient continûment. Un coefficient de quantification classique ne comporte pas un tel palier horizontal mais décroît régulièrement en fonction du remplissage.

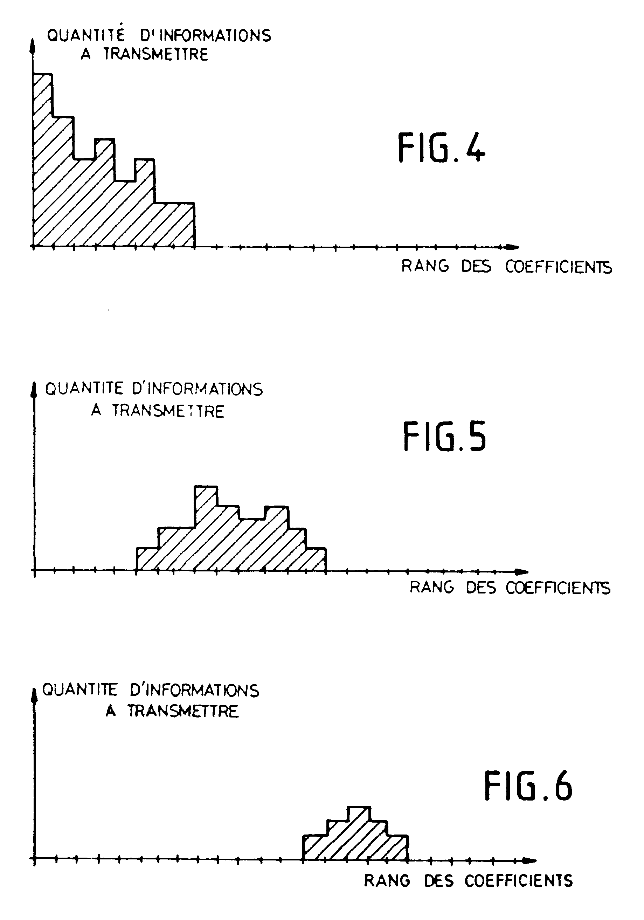

Les figures 4, 5, et 6 illustrent le processus de régulation, dans le cas où trois images successives représentent une scène fixe. Chacune de ces figures représente un graphe ayant en ordonnée la quantité d'informations effectivement transmise, et en abscisse le rang des coefficients ou des différences de coefficients de transformation de chacune de ces images, ce rang étant déterminé sur le chemin de balayage représenté par la figure 1. Les quantités d'informations considérées sont celles obtenues après la pondération ; la quantification ; et le codage Huffmann.

Cependant la quantité d'informations correspondant au premier coefficient de transformation, c'est-à-dire ayant 0 pour indice de ligne et pour indice de colonne, n'est pas représentée sur les figures 4 à 6 car elle n'est pas soumise à la régulation de débit. Le premier coefficient n'est pas pondéré et n'est pas normalisé, pour éviter de faire apparaître des discontinuités visibles entre les blocs sur l'image restituée. Les figures 4 à 6 montrent donc la quantité d'informations correspondant seulement aux autres coefficients ou différences de coefficients de transformation.

La première image de ces trois images successives est supposée différente des images l'ayant éventuellement précédée. Les coefficients de transformation de cette première image sont donc tous codés par un codage intra-image nécessitant une grande quantité d'informations, qui est surtout répartie dans les coefficients de transformation ayant un faible rang. D'autre part, la pondération a pour effet de favoriser aussi les coefficients de faible rang. Et enfin, certains coefficients de rang élevé sont arrondis à zéro au cours de l'opération consistant à arrondir à la valeur entière la plus proche. Tout se passe comme s'il y avait un seuil à +0,5 et -0,5. Pour toutes ces raisons, sur la figure 4, les coefficients de rang élevé ne sont transmis par aucune quantité d'informations. Notamment, beaucoup de coefficients de rang élevé sont arrondis à la valeur zéro, car ils sont inférieurs à 0,5 en valeur absolue. Le nombre de coefficients ou de différences de coefficients arrondis à zéro augmente lorsqu'il y a une diminution du coefficient de quantification, consécutive à un fort remplissage de la mémoire tampon. L'effet de seuil combiné à la quantification tend donc à supprimer aussi des informations correspondant aux fréquences spatiales élevées.

La figure 5 correspond à une deuxième image qui suit immédiatement la première et qui est identique à celle-ci. Les coefficients de transformation de la deuxième image sont donc théoriquement strictement identiques à ceux de la première image. Ils seront codés par un codage inter-images pour exploiter la corrélation entre la première et la deuxième image. Le codage inter-images est réalisé en calculant la différence entre les coefficients de transformation de la deuxième image et les coefficients de transformation de la première image après avoir fait subir à ces derniers un codage puis un décodage afin de soustraire une même valeur au cours de l'étape de codage et au cours de l'étape de décodage.

Les opérations de pondération et de quantificiation suppriment des informations et provoquent donc des erreurs de codage qui se traduisent par une différence non nulle entre les coefficients de transformation avant codage et les coefficients de transformation après codage puis décodage. Il y a donc des différences non nulles entre les coefficients codés puis décodés pour la première image et les coefficients qui vont être codés pour la deuxième image. Ces différences sont dues en particulier au fait que le coefficient de pondération et le coefficient de quantification varient d'une image à une autre.

La figure 5 représente la quantité d'informations correspondant à ces différences de coefficients, ces différences ayant subies une pondération, une quantification, et un codage de Huffmann. La quantité d'informations constituée par ces différences est plus faible que la quantité d'informations correspondant aux valeurs des coefficients de transformation de la première image, pour plusieurs raisons. Tout d'abord, parce que les différences de coefficients ont de faibles valeurs, puisque la première et la seconde image sont identiques. Cette quantité d'informations correspond surtout aux fréquences moyennes et aux fréquences élevées, c'est-à-dire aux rangs moyens et aux rangs élevés, parce que la pondération et la quantification réalisées au cours du codage de la première image ont sacrifié les informations correspondant aux rangs moyens et aux rangs élevés. Ces informations permettront de rajouter des détails dans la deuxième image restituée. Le codage de tous les blocs de la deuxième image étant un codage inter-images, exploitant la corrélation avec la première image, la quantité d'informations à transmettre diminue, par conséquent la mémoire tampon se vide et le processus de régulation provoque une augmentation du coefficient de quantification puis son maintien à la valeur constante : 1.

L'augmentation du coefficient de quantification augmente l'amplitude des différences de coefficients de transformation et tend donc à augmenter la quantité d'informations à transmettre pour les coefficients de rangs moyens et élevés, et tend donc à remplir la mémoire tampon. Cependant le plafonnement du coefficients de quantification freine cette tendance. D'autre part, les informations à transmettre correspondent surtout aux fréquences spatiales moyennes et élevées puisque les informations correspondant aux fréquences spatiales basses ont été transmises en grande partie au cours du codage de la première image. La pondération défavorise les fréquences élevées d'autant plus que la mémoire tampon est remplie. Donc la pondération tend, elle aussi, à réduire la quantité d'information transmise pour la deuxième image. Finalement, celle-ci est nettement inférieure à celle transmise pour la première image.

Le codage d'une troisième image identique aux deux précédentes est aussi un codage inter-images et n'a à transmettre que des informations correspondant à des fréquences spatiales élevées et n'ayant pas pu être transmises au cours du codage de la première et de la deuxième image. Ces informations permettront de rajouter des détails fins à la troisième image restituée. Ainsi lorsqu'il y a une suite d'images fixes, les images restituées atteignent très rapidement une très bonne fidélité.

La figure 6 représente la quantité d'informations à transmettre pour la troisième image, en fonction du rang des coefficients. Il est à remarquer que cette quantité d'informations correspond surtout aux fréquences spatiales très élevées et qu'elle est globalement en diminution par rapport à la quantité d'informations à transmettre pour le codage de la deuxième image et pour le codage de la première image, car la pondération défavorise beaucoup les fréquences très élevées, bien que la mémoire tampon commence à se vider. La sévérité de la quantification et de la pondération est choisie telle que la régulation ne tend pas à maintenir constant le remplissage à un niveau constant, mais tend à diminuer le remplissage pendant chaque codage inter-images.

Dans le cas le plus général, chaque image comporte des zones fixes et zones en mouvement. Les blocs situés dans des zones en mouvement nécessitent un codage intra-image qui tend à saturer la mémoire tampon. La sévérité de la pondération et de la quantification est choisie de telle façon que la mémoire ne soit pas saturée par les informations correspondant à ces blocs. La pondération est fonction du remplissage de la mémoire tampon,de façon à moins défavoriser les coefficients ou les différences de coefficients correspondant aux fréquences spatiales élevées, lorsque le remplissage diminue. Mais la sévérité de la pondération reste telle que la mémoire tampon se vide lorsqu'il y a une suite de blocs codés par le codage inter-images, de façon à avoir une capacité disponible pour le codage de blocs codés par un codage intra-image qui produit une forte quantité d'informations à transmettre.

Ainsi lorsqu'un ou plusieurs blocs successifs sont à coder par un codage intra-image, la mémoire tampon n'est pas au voisinage de la saturation, par conséquent le coefficient de quantification n'a pas besoin d'être augmenté brutalement pour éviter un dépassement de la capacité de la mémoire tampon lorsqu'arrive un bloc à coder par le codage intra-image. En évitant de brutales variations du coefficient de quantification, ce processus de régulation évite de dégrader brutalement la qualité de restitution de l'image d'un bloc à un autre dans la même image. Ceci permet d'éviter un contraste visible dans la qualité de restitution, entre des blocs codés par le codage inter-images et des blocs codés par le codage intra-image, voisins dans une même image.

Puisque le procédé selon l'invention consiste à multiplier les coefficients ou différences de coefficients de transformation correspondant à la luminance et aux deux signaux de différence de couleur, par le même coefficient de pondération et par le même coefficient de quantification, à une constante multiplicative près, ces trois types de signaux sont donc codés avec la même qualité à l'intérieur d'un même bloc, et les informations à transmettre peuvent être stockées dans une mémoire tampon commune. Ce stockage dans une mémoire tampon commune permet de transmettre les informations codées avec un rapport quelconque entre les quantités d'informations correspondant aux trois types de signaux. L'absence de rapport imposé entre les quantités d'informations transmises pour les trois types de signaux permet, à fidélité égale, un gain important sur le taux de compression des images.

En effet, la quantité d'informations à transmettre pour les deux signaux de différence de couleur sont extrêmement variable en fonction des scènes représentées par les images. Lorsque les images ont des couleurs peu saturées, la quantité d'informations à transmettre pour les signaux de différence de couleur est faible. Dans ce cas, la régulation commune permet de transmettre une quantité réduite d'informations pour les signaux de différence de couleur, contrairement au procédé classique de régulation indépendante pour les trois types de signaux, qui conduit à utiliser trois mémoires tampons indépendantes et à imposer un rapport constant entre les quantités d'informations transmises pour les trois types de signaux.

Le remplissage $E_b$ de la mémoire tampon doit être connu avant de commencer le codage d'un bloc considéré. Il doit prendre en compte les informations codées correspondant à tous les blocs qui précèdent

EP 0 323 362 B1

le bloc considéré. Il est calculé en additionnant les quantités d'informations à transmettre pour tous les blocs précédant le bloc considéré, et en soustrayant à cette somme la quantité d'informations transmise, calculée en faisant le produit du débit du canal de transmission par la durée qui s'est écoulée entre le début de la transmission et la fin de la transmission des informations codant le bloc précédant le bloc considéré.

Après la quantification, chaque valeur de coefficient ou de différence de coefficients de transformation, à l'exception du premier coefficient dans chaque bloc, et à l'exception des valeurs nulles, est codée par un code de Huffmann. Les coefficients ou différences de coefficients de transformation d'un bloc sont considérés successivement dans l'ordre de balayage correspondant à $u^2 + v^2$ croissant, conformément à la figure 1. Les coefficients ou différences de coefficients qui sont nuls sont codés par plages, la longueur des plages étant codée par un code de Huffmann. L'ordre de balayage choisi est tel que la suite des coefficients ou des différences de coefficients d'un bloc se termine toujours par une longue plage de valeurs nulles. Le premier coefficient ou la première différence de coefficients de chaque bloc, ayant 0 pour indice de ligne et pour indice de colonne, est transmis sans codage de Huffmann.

Pour optimiser la réduction de débit, le codage de Huffmann est réalisé selon 8 arbres différents :
- A1, pour coder les coefficients de transformation correspondant au signal de luminance, qui sont précédés d'une plage de zéros ;
- A2, pour coder les coefficients de transformation correspondant au signal de luminance, qui ne sont pas précédés d'une plage de zéros ;
- A3, pour coder les différences de coefficients de transformation correspondant au signal de luminance, qui sont précédés d'une plage de zéros ;
- A4, pour coder les différences de coefficients de transformation correspondant au signal de luminance, qui ne sont pas précédés d'une plage de zéros ;
- A5, pour coder les coefficients de transformation correspondant à l'un quelconque des signaux de différence de couleur, qui sont précédés d'une plage de zéros ;
- A6, pour coder les coefficients de transformation correspondant à l'un quelconque des signaux de différence de couleur, qui ne sont pas précédés d'une plage de zéros ;
- A7, pour le codage des différences de coefficients de transformation correspondant à l'un quelconque des signaux de différence de couleur, qui sont précédés d'une plage de zéros ;
- A8, pour le codage des différences de coefficients de transformation correspondant à l'un quelconque de signaux de différence de couleur, qui ne sont pas précédés d'une plage de zéros.

Cependant, il est possible d'utiliser des arbres de codage A5 et A7 identiques ; et des arbres de codage A4, A6 et A8 identiques, moyennant une certaine dégradation du taux de compression. Il est à noter aussi que les arbres de codage codent en outre des événements particuliers : des bits de bourrage et des mots de séparateurs de données.

Le fait d'utiliser deux arbres différents pour coder les valeurs des coefficients ou des différences de coefficients non nulles qui ne sont pas précédés d'une plage de zéros et pour coder les coefficients ou différences de coefficients non nuls qui sont précédés d'une plage de zéros, apporte une réduction de la quantité d'informations à transmettre, de l'ordre de 10%, par rapport aux procédés connus dans lesquels un seul arbre de codage est utilisé pour ces deux cas distincts. Cette réduction a la raison suivante. A priori il faudrait deux arbres distincts, avec un préfixe les distinguant, pour coder d'une part une plage de zéros et pour coder d'autre part un coefficient ou une différence de coefficient non nul. Mais il n'y a jamais deux plages de zéros consécutives, car alors elles seraient codées comme une seule plage. Par conséquent, il est certain qu'après une plage de zéros il y a un coefficient ou une différence de coefficients qui est non nul. C'est une information connue qui n'a donc pas besoin d'être transmise. L'utilisation des deux arbres mentionnés ci-dessus permet d'exploiter cette redondance d'informations pour réduire la quantité d'informations à transmettre.

Dans cet exemple de mise en oeuvre, les codes de Huffmann utilisés pour coder les coefficients ont une dynamique limitée à -63, +63. Ceux utilisés pour coder les différences de coefficients ont une dynamique limitées à -31, +31. En cas de dépassement, au moins un préfixe de dépassement est rajouté. Pour distinguer les valeurs 0 modulo +64 et 0 modulo -64, deux mots de code distincts sont ajoutés. Les valeurs multiples de +64 et de -64 sont notées respectivement 0+ et 0- dans ce qui suit et elles sont codées en utilisant plusieurs préfixes de dépassement. La dernière plage de zéros dans chaque bloc n'est pas codée, les données codées correspondant à chaque bloc étant séparées par un mot de synchronisation inter-blocs. La valeur du premier coefficient ou de la première différence de coefficients dans chaque bloc est représentée en clair par neuf bits.

Les huit arbres de Huffmann satisfont aux contraintes suivantes :
- les mots de code ont tous une longueur inférieure à 16 bits ;

- aucune concaténation licite de mots de code ne doit faire apparaître une suite de 10 zéros, par conséquent :
  - les mots de code ne peuvent se terminer par plus de 5 zéros, sauf exception ;
  - le mot "00000" est réservé à des utilisations précises ;
  - les mots de code ne peuvent débuter par plus de 4 zéros ;
- seuls les arbres de codage correspondant aux signaux de différence de couleur incluent des mots de synchronisation.

L'arbre de codage A1 code 195 événements. Les coefficients non nuls donnent lieu à 129 événements possibles qui sont : les valeurs -63, ..., -1, 1, ..., +63 ; un préfixe de dépassement propre aux coefficients ; une valeur multiple de +64, qui est notée 0+ ; une valeur multiple de -64, qui est notée 0-.

- Les plages de zéros donnent lieu à 65 événements possibles : les valeurs de longueur : 1, ..., 63 ; un préfixe de dépassement propre aux plages de zéros ; et une valeur nulle $0_p$ propre aux plages de zéros.
- Un événement particulier est constitué par un bourrage.

Les contraintes que doit satisfaire cet arbre A1 sont les suivantes : l'événement 0+ doit être codé par "00000" ; les mots de code doivent se terminer par au plus 3 zéros ; et le préfixe de dépassement pour les coefficients doit se terminer par 1.

L'arbre A2 code 129 événements : les valeurs -63, ..., -1, 1, ..., 63 ; un préfixe de dépassement propre aux coefficients ; une valeur multiple de +64, notée 0+ ; une valeur multiple de -64, notée 0-. Cet arbre doit satisfaire à la contrainte suivante : le mot de code le plus court doit avoir une longueur de deux bits et être constitué par "00". Il n'y a pas d'événement interdit.

L'arbre A3 code 195 événements et a les caractéristiques suivantes :

- les coefficients non nuls donnent lieu à 129 événements : les valeurs -63, ..., -1, 1, ..., 63 ; un préfixe de dépassement propre aux coefficients ; une valeur multiple de +64 ; et une valeur multiple de -64 ;
- les plages de zéros donnent lieu à 65 événements : les valeurs 1, ..., 63 ; un préfixe de dépassement propre aux plages de zéros ; une valeur $0_p$ propre aux plages de zéros ;
- un événement particulier est constitué par un bourrage.

Cet arbre A3 doit satisfaire aux contraintes suivantes : la valeur multiple de +64 est codée par "00000" ; les mots de code ne peuvent se terminer par plus de 4 zéros ; la longueur des mots de code, pour les longueurs de plages de zéros, est supérieure à trois bits ; et le préfixe de dépassement propre au coefficient doit se terminer par 1.

L'arbre A4 doit coder 65 événements qui sont : les valeurs de coefficients non nuls : -31, ..., -1, +1, ..., 31 ; un préfixe de dépassement propre aux coefficients ; une valeur multiple de +31 ; une valeur multiple de -31. Cet arbre doit satisfaire à la contrainte suivante : le mot de code le plus court doit avoir une longueur de un bit et être égal à 0. Il n'y a pas d'événement interdit.

L'arbre A5 code 131 événements et doit avoir les caractéristiques suivantes : 65 événements pour les coefficients, constitués par les valeurs -31, ..., -1, +1, ..., 31 ; un préfixe de dépassement propre aux coefficients, 0+, 0- ; 65 événements pour les plages de zéros : les valeurs 1, ..., 63, un préfixe de dépassement propre aux plages de zéros, et la longueur zéro ; un événement particulier qui est constitué par un mot de synchronisation intra-bloc. Cet arbre doit satisfaire aux contraintes suivantes : la valeur 0+ doit être codée par 00000 ; les plages de zéros ne peuvent se terminer par plus de quatre zéros ; la longueur des plages de zéros doit être supérieure à 3 ; et le code du préfixe de dépassement propre aux coefficients doit se terminer par 1.

Un événement particulier est constitué par un mot de synchronisation intra-bloc.

L'arbre A6 code 65 événements et il est identique à l'arbre A4.

L'arbre A7 code 131 événements et il est identique à l'arbre A5.

L'arbre A8 code 65 événements et il est identique à l'arbre A4.

Un perfectionnement optionnel du procédé selon l'invention consiste à rendre le coefficient de pondération et le coefficient de quantification fonctions d'un paramètre appelé classe du bloc d'éléments d'image en cours de codage. Ce paramètre traduit la difficulté de restitution de ce bloc d'éléments d'image. En effet, l'expérience montre que les blocs les plus mal restitués sont caractérisés par le fait qu'ils contiennent au moins une zone sombre relativement uniforme se prolongeant sur au moins un bloc d'éléments d'image contigu au bloc considéré, la frontière entre les deux blocs coupant la zone sombre sur une longueur relativement importante. Dans un tel cas la zone sombre est codée différemment de part et d'autre de la frontière, ce qui rend visible le découpage de l'image en blocs, notamment parce que le bruit granulaire n'est pas restitué de la même façon et qu'il est visible particulièrement dans une zone sombre.

Dans un exemple de mise en oeuvre, le procédé consiste à classer les blocs d'éléments d'image dans huit classes numérotées de 1 à 8, en fonction d'une difficulté croissante pour les restituer sans faire apparaître les frontières entre les blocs. Il consiste à subdiviser chaque bloc de 16x16 éléments en blocs de 4x4 éléments, puis à calculer la valeur moyenne de la luminance dans chacun des sous-blocs de 4x4 éléments. En pratique, seuls les sous-blocs situés à la périphérie d'un bloc sont considérés.

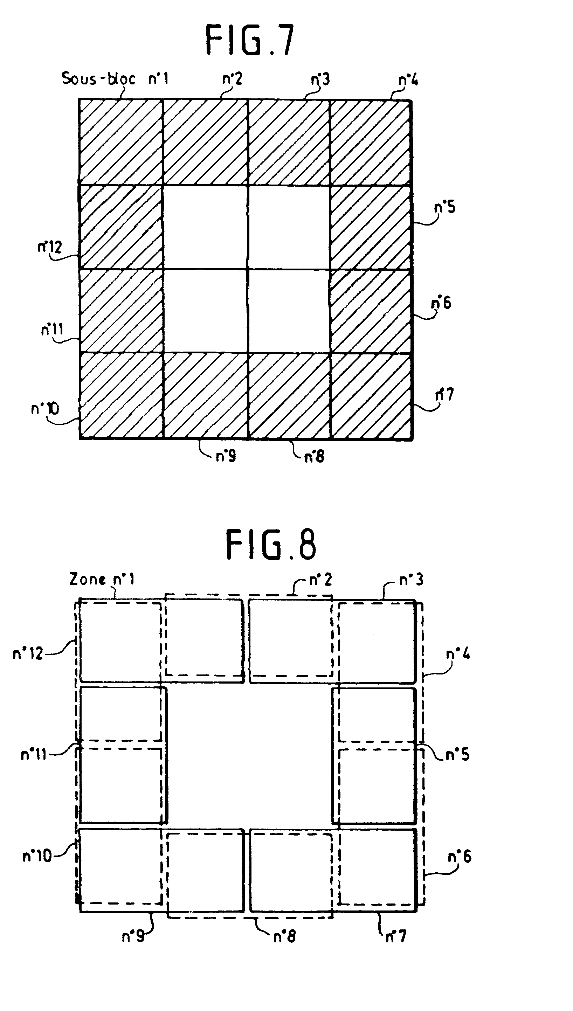

La figure 7 représente un exemple de bloc, avec les douze sous-blocs pour lesquels une valeur moyenne de la luminance est calculée. Ceux-ci sont hachurés. Le procédé consiste ensuite à calculer une valeur moyenne de luminance dans des zones de formes allongées situées à la périphérie des blocs d'éléments d'image et englobant deux sous-blocs contigus. Ces zones se recouvrent partiellement. Sur la figure 7 les sous-blocs sont numérotés dans le sens des aiguilles d'une montre à partir de celui situé dans le coin supérieur gauche. Sur la figure 8 les zones sont numérotées dans le sens des aiguilles d'une montre, à partir de celle située dans le coin supérieur gauche. Par exemple la zone n°1 recouvre le sous-bloc n°1 et le sous-bloc n°2. La zone n°2 recouvre le sous-bloc n°2 et le sous-bloc n°3. La valeur de luminance moyenne dans une zone est égale à la demi somme des valeurs de luminance moyenne des deux sous-bloc englobés dans cette zone. Cette valeur de luminance moyenne est calculée selon la formule suivante :

$$L(\text{zone } n^o i) = \tfrac{1}{2}(L(\text{bloc } n^o i) + L(\text{bloc } n^o(i+1))) \qquad (9)$$

Pour $i = 1$ à 12 ; et où $L(\text{bloc } n^o i)$ et $L(\text{bloc } n^o i(+1))$ représentent respectivement la valeur de luminance moyenne dans le bloc $n^o i$ et la valeur de luminance moyenne dans le bloc $n^o i + 1$.

Le procédé consiste ensuite à déterminer la zone ayant la plus petite valeur de luminance moyenne. Cette valeur de luminance minimale est notée Lmin et détermine la difficulté du codage du bloc considéré. Le procédé consiste ensuite à classer le bloc considéré dans une classe de difficulté parmi huit, en comparant la valeur de luminance minimale par rapport à sept valeurs de seuil et consiste à déterminer un coefficient de pondération et un coefficient de quantification en fonction de la classe de difficulté déterminée pour le bloc considéré.

La sévérité de la pondération et du coefficient de quantification est atténuée d'autant plus que la difficulté de codage d'un bloc est plus grande, c'est-à-dire d'autant plus que la luminance minimale déterminée est plus faible. La répartition des blocs en huit classes de difficulté permet d'avoir une progressivité de la diminution de sévérité de la pondération et de la quantification, quand la difficulté de codage augmente.

Une autre caractéristique optionnelle du procédé selon l'invention concerne la protection contre la propagation des erreurs, propagation propre au procédé de codage différentiel inter-images. Si des blocs homologues dans une suite d'images, c'est-à-dire ayant la même position dans chacune des images de la suite, sont codés par un codage inter-images, une erreur dans le premier bloc se répercute sur tous les blocs homologues suivants. Lorsqu'une telle erreur est détectable, il est possible de remplacer l'ensemble du bloc erroné par le bloc d'éléments d'image homologue dans l'image précédant celle du bloc erroné. Les images étant, dans cet exemple, constituées de deux trames codées séparemment, le bloc homologue est un bloc d'éléments de la trame précédant la trame considérée et ayant la même parité. Cependant, cette méthode de correction ne restitue pas une image parfaite, par conséquent il est néanmoins nécessaire de limiter la propagation des erreurs en imposant un codage intra-image pour chaque bloc ayant une position donnée, avec un intervalle maximal fixé correspondant, par exemple, à 30 images. Si le codage intra-image est imposé à des instants aléatoires ou périodiques le coût en débit est augmenté de manière importante.

Le procédé selon l'invention permet de limiter la propagation des erreurs avec une faible augmentation du débit d'information. Il comporte un premier critère consistant à imposer le codage intra-image lorsque, pour un bloc donné, la différence relative du coût de codage inter-images et du coût de codage intra-image est inférieure à une première valeur de seuil, ou bien lorsque le bloc donné n'a pas été codé par un codage intra-image depuis un nombre d'images N(i,j) supérieur à une seconde valeur de seuil fixée ; (i,j) étant des coordonnées repérant la position du bloc dans une image. La première valeur de seuil peut être une fonction $f(N(i,j))$ du nombre d'images depuis lequel le bloc donné n'a pas été codé par un codage intra-image. C'est une fonction croissante, de façon à provoquer un codage intra-image au bout d'un certain temps, même si la différence relative de coût se maintient constante.

La différence relative des coûts de codage est calculée en faisant la différence entre le nombre de bits nécessaire au codage du bloc par un codage intra-image et du nombre de bits nécessaire au codage du bloc par un codage inter-images, et en divisant cette différence par le nombre de bits nécessaire au codage du bloc par un codage inter-images. La fonction $f(N(i,j))$ peut être une fonction de la forme $A.N^2(i,j)$ ou $A.N^3(i,j)$, dans laquelle A est une constante choisie de façon à ce que le forçage ait lieu au plus tard après 50 trames codées par un codage inter-images. En pratique, il est nécessaire de prévoir un second critère permettant de limiter d'une manière certaine le nombre d'images pendant lequel un bloc donné est codé par un codage inter-images. Ce second critère consiste à comparer le nombre d'images pendant lequel le bloc donné a été codé par un codage inter-images, à une seconde valeur de seuil No, fixée par exemple à 50, ce qui correspond à 50 trames et donc à une durée de 1 seconde dans un standard de télévision européen.

Dans certains cas, ces critères peuvent conduire à un grand nombre de forçages du codage intra-images, dans une même image. Pour éviter une augmentation brutale de la quantité d'informations à transmettre, il est nécessaire d'étaler dans le temps les opérations de forçage du codage intra-image. Pour cela, le procédé consiste en outre à n'imposer un codage intra-image que pour des blocs successifs séparés d'un intervalle supérieur à une troisième valeur de seuil fixée. Par exemple, il peut consister à ne permettre le forçage que pour les blocs dont le numéro, dans la trame considérée, est égal à $N_1$ modulo 4, $N_1$ étant une valeur entière variant de 0 à 3 et changeant à chaque trame. Dans cet exemple, tout bloc est codé par un codage intra-image avec un intervalle au plus égal à $N_0 + 4$ trames.

Le procédé de codage selon l'invention consiste en outre à transmettre avec les données codées des informations de synchronisation permettant de retrouver le rythme d'échantillonnage des images après une transmission sur un canal asynchrone ; et consiste en outre à transmettre des séparateurs permettant de retrouver la nature des diverses données codées qui sont transmises en série dans le canal de transmission.

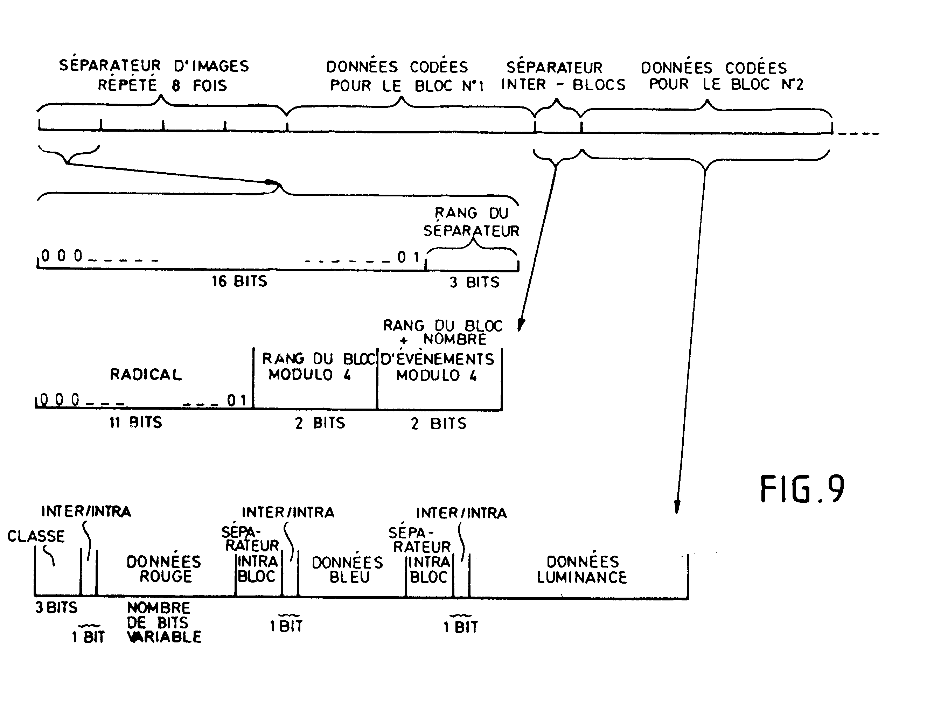

Pour retrouver le rythme, dit rythme vidéo, de l'échantillonnage des images, deux types de motifs de synchronisation sont transmis indépendamment des données codées et de leurs séparateurs, en gelant la transmission de ces données codées. Un motif de synchronisation image est transmis avec une fréquence de 25 Hz, avant les données codées de chaque trame paire ; et un motif de synchronisation ligne est transmis à la fréquence de 15625 Hz, pour asservir une horloge à la fréquence d'échantillonnage des éléments d'image. Ces deux types de motif de synchronisation n'ont pas une position fixe par rapport aux données codées et ne sont pas représentées sur la figure 9.

Ces deux types de motif de synchronisation n'ont pas besoin d'être inimitables par des concaténations de données, car ces motifs sont séparés d'un nombre de bits déterminé à 1 bit près. Un apprentissage, consistant à vérifier la présence de motifs successifs aux instants prévus, permet de les distinguer des données.

Les séparateurs de données codées sont représentés sur la figure 9. Les données codées correspondant à deux trames sont précédées d'un séparateur d'image qui est répété 8 fois, dans cet exemple. Chaque séparateur d'image comporte un préfixe de 16 bits comportant 15 zéros et 1 un ; et comporte un mot binaire de 3 bits donnant le rang du séparateur dans la répétition. En pratique, le nombre de répétitions est choisi en fonction du taux d'erreur dans le canal de transmission. Le préfixe est un mot binaire non imitable par une concaténation licite des mots de code de Huffmann et des mots séparateurs inter-blocs. La répétition des séparateurs d'image permet de les protéger contre les erreurs isolées et les petits paquets d'erreurs. La détection d'un séparateur d'images n'est validée que si elle est réalisée plusieurs fois et la position exacte des séparateurs d'images est connue grâce aux 3 bits codant le rang de chaque séparateur d'images.

Les données codées correspondant au bloc n°1 sont transmises après le séparateur d'images répété 8 fois. Puis un séparateur inter-blocs est transmis et précède les données codées pour le bloc n°2. Le séparateur inter-blocs comporte un radical de 11 bits constitué de 10 zéros et de 1 un ; un mot binaire de deux bits traduisant le rang du bloc, modulo 4 ; et un mot binaire de deux bits traduisant la somme modulo 4 du rang du bloc et du nombre d'événements codés dans le bloc suivant le séparateur inter-blocs. Le radical ainsi constitué est non inimitable par une concaténation licite des mots de code appartenant aux huit arbres de codage de Huffmann. Pour cela ces arbres de codage comportent des mots de code commençant par au plus quatre 0 et se terminant par au plus cinq 0. Un mot de code ne comportant que des 0 est interdit car s'il était répété il y aurait imitation du séparateur inter-blocs.

La partie inférieure de la figure 9 représente le format des données codées pour un bloc. Il comporte : un mot binaire de trois bits traduisant la classe du bloc ; un bit indiquant le type de codage, inter-images ou intra-image, des données codées du signal de différence de couleur rouge ; puis ces données, avec un nombre de bits variables ; puis un séparateur intra-bloc constitué par un mot de code de Huffmann ; puis un bit, noté inter-intra, indiquant le type de codage des données codées pour le signal de différence de couleur bleue ; puis un séparateur intra-bloc, constitué par un mot de code de Huffmann ; puis un bit indiquant le type de codage pour les données codées du signal de luminance ; puis les données codées du signal de luminance.

Il est à remarquer que les séparateurs d'image introduisent une redondance négligeable compte tenu de leur rareté. Les séparateurs intra-blocs sont indispensables puisque la dernière plage de zéros de chaque bloc n'est pas codée. Ils ne sont pas protégés et ils n'introduisent donc pas de redondance. Par contre il y a une redondance dans les séparateurs inter-blocs. Selon l'art antérieur, les séparateurs inter-blocs appartenaient aux arbres de codage inter-images et intra-image du signal de luminance et avaient une longueur de 5 bits. Celui utilisé dans cet exemple de mise en oeuvre a une longueur de 15 bits, soit une redondance de 10 bits. D'autre part, les arbres de codage de Huffmann des signaux de différence de couleur comportent un mot réservé formé de cinq 0 consécutifs pour coder la valeur 0 +, ce qui augmente la longueur moyenne des codes de Huffmann par rapport à ceux utilisés dans l'art antérieur. La redondance d'informations dans les séparateurs inter-blocs est estimée égale à moins de 1% du total des informations transmises. Cette redondance est faible mais permet d'améliorer notablement la protection contre les erreurs des séparateurs inter-blocs.

Une bonne détection des séparateurs inter-blocs est indispensable car la perte d'un seul bit des données codées provoque une perte totale de la synchronisation du décodage par rapport au codage et provoque donc la perte d'une image entière.

Dans le cas où un séparateur inter-blocs est erroné, il est possible de resynchroniser le décodage sur le codage au moyen du mot binaire traduisant le rang du bloc, modulo 4.

Il y a au moins quatre possibilités de détecter une erreur dans un bloc, au niveau du séparateur inter-blocs :
- en détectant un séparateur inter-blocs avant d'avoir détecté les deux séparateurs intra-bloc contenus dans tout bloc normal ;
- en détectant un séparateur inter-blocs dont le début ne correspond pas avec la fin des données du bloc précédant, la fin de ces données étant prévue grâce au mot binaire de deux bits traduisant le rang du bloc plus le nombre d'événements modulo 4 ;
- en détectant un rang de bloc, modulo 4, non égal au rang du bloc précédant, incrémenté de 1 ;
- en détectant une somme d'un rang de bloc et d'un nombre d'événements, modulo 4, qui n'est pas égale à la somme du rang du bloc et du nombre d'événements reçus.

La réception d'un bloc n'est validée que si aucune de ces conditions n'est réalisée. L'expérience montre que l'utilisation du rang du bloc, modulo 4, et de la somme du rang du bloc et du nombre d'événements modulo 4, qui sont transmis dans les séparateurs inter-blocs, permet de détecter une grande majorité des erreurs affectant les blocs.

Quand un bloc est détecté comme étant erroné, le procédé consiste alors à le masquer en le remplaçant par le bloc homologue dans la trame qui précède immédiatement la trame en cours de décodage. Il est à remarquer qu'une erreur isolée sur un séparateur inter-blocs entraîne le masquage du bloc qui précède et du bloc qui suit, puisque la fin du premier et le début du second ne sont pas identifiables correctement.

Le type d'erreur le plus gênant est constitué de paquets d'erreurs atteignant au moins quatre blocs consécutifs, car dans ce cas il n'est pas possible de resynchroniser le décodage sur le codage puisque le rang du bloc est transmis modulo 4. Tous les blocs suivants, dans la même image, sont décalés. La synchronisation n'est retrouvée qu'au début de l'image suivante. D'autre part, l'erreur se propage sur les images suivantes dans les blocs codés par un codage inter-images. Il est possible d'augmenter la résistance aux erreurs, des séparateurs inter-blocs, en augmentant le modulo du mot traduisant le rang du bloc et du mot traduisant la somme du rang du bloc et du nombre d'événements.

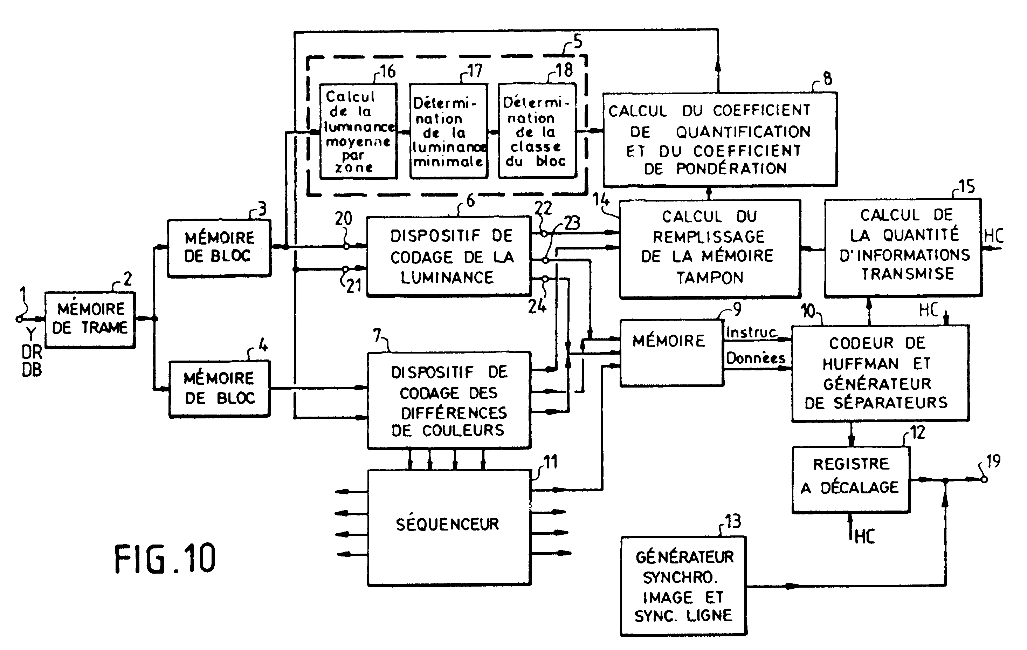

La figure 10 représente le schéma synoptique d'un exemple de réalisation d'un dispositif de codage pour la mise en oeuvre du procédé selon l'invention. Cet exemple comporte : une borne d'entrée 1 ; une mémoire de trame 2 ; une première et une seconde mémoire de bloc, 3 et 4 ; un dispositif 5 de classification des blocs ; un dispositif 6 de codage de la luminance ; un dispositif 7 de codage des différences de couleurs ; un dispositif 8 de calcul du coefficient de quantification et du coefficient de pondération ; une mémoire 9 ; un dispositif 10, codeur de Huffmann et générateur de séparateurs ; un séquenceur 11 ; un registre à décalage 12 ; un générateur 13 de synchronisation d'image et de synchronisation de ligne ; un dispositif 14 de calcul du remplissage de la mémoire tampon, constituée par la mémoire 9, le dispositif 10, et le registre 12 ; un dispositif 15, de calcul de la quantité d'informations transmise ; et une borne de sortie 19 reliée à un canal de transmission asynchrone ayant un débit constant de 10 Mb par seconde.

La borne d'entrée 1 reçoit en parallèle une valeur de luminance Y, une valeur de différence de couleur rouge DR, et une valeur de différence de couleur bleue DB, sous la forme d'un triplet de mots binaires. Chaque triplet représente un élément d'une image. La suite d'images considérée est une suite d'images de télévision classique dans laquelle chaque image est constituée de deux trames entrelacées mais ces deux trames sont codées indépendamment. Le signal de luminance est échantillonné à la fréquence de 10,125 MHz et chacun des signaux de différence de couleur est échantillonné à une fréquence de 5,06 MHz. Les dispositifs de codage 6 et 7 fonctionnent en parallèle. Pendant que le dispositif 6 code deux valeurs de luminance, le dispositif 7 code une valeur de différence de couleur rouge et une valeur de différence de couleur bleue.

Une entrée de données de la mémoire de trame 2 est reliée à la borne d'entrée 1. Des entrées de commande de lecture et d'écriture de cette mémoire 2 sont reliées à des sorties du séquenceur 11 par des liaisons non représentées. Le séquenceur 11 commande le stockage des valeurs Y, DR, DB, au fur et à mesure qu'elles sont disponibles. Une sortie de données de la mémoire 2 est reliée à des entrées de données des mémoires de bloc, 3 et 4. Des entrées de commande des mémoires 3 et 4 sont reliées à des sorties du séquenceur 11 par des liaisons non représentées. Le séquenceur 11 commande la lecture dans la mémoire 2 et l'écriture dans la mémoire 3 de 16x16 valeurs de luminance représentatives d'un bloc de 16x16 éléments d'image. Il commande simultanément la lecture dans la mémoire 2 et l'écriture dans la mémoire 4 de 8x16 valeurs de différence de couleur rouge et de 8x16 valeurs de différence de couleur bleue représentatives du même bloc d'éléments d'image.

Une sortie de données de la mémoire de bloc 3 est reliée à une borne d'entrée 20 du dispositif 6 et à une entrée du dispositif de classification 5. Une sortie de données de la mémoire de bloc 4 est reliée à une entrée du dispositif 7. Une autre entrée du dispositif 7 et une borne d'entrée 21 du dispositif 6 sont reliées à une sortie du dispositif 8. Le dispositif 8 fournit la valeur d'un coefficient de quantification et d'un coefficient de pondération, calculées de façon à réguler le débit des informations codées transmises sur le canal de transmission. Le dispositif 8 possède une première entrée reliée à une sortie du dispositif de classification 5, et une seconde entrée reliée à une sortie du dispositif de calcul 14. Le dispositif 14 possède une première entrée reliée à une sortie du dispositif 15, une deuxième entrée reliée à une borne de sortie 22 du dispositif 6, et une troisième entrée à une première sortie du dispositif 7.

La mémoire 9 possède : une première entrée de données reliée à une borne de sortie 23 du dispositif 6 et à une deuxième sortie du dispositif 7 ; une deuxième entrée de données reliée à une borne de sortie 24 du dispositif 6 et à une troisième sortie du dispositif 7 ; et une troisième entrée de données reliée à une sortie du séquenceur 11.

La mémoire 9 a pour rôle de stocker les valeurs des coefficients de transformation cosinus ou des différences de coefficient de transformation cosinus, ou les longueurs de plages de zéros, représentant les valeurs de luminance ou de différence de couleur, pour permettre une régulation du débit des informations codées envoyées dans le canal. Les données reçues par la première entrée de données de la mémoire 9 sont des valeurs de coefficient de transformation ou de différences de coefficients de transformation ou de longueurs de plages de zéros. Les données reçues par la deuxième entrée de données de la mémoire 9 sont des indicateurs correspondant aux données appliquées sur la première entrée de données, pour indiquer le type de codage, inter ou intra-images, et le type de données : données correspondant à des valeurs de luminance, ou à une différence de couleur rouge, ou à une différence de couleur bleue, et en indiquant les coefficients ou différences de coefficients non nuls d'une part, et les longueurs de plages de zéros, d'autre part.

Les données reçues par la troisième entrée de données de la mémoire 9 correspondent aussi aux données reçues par la première entrée et indiquent le début d'un bloc ou, à l'intérieur d'un bloc, le début des données de luminance, ou le début des données d'une différence de couleur rouge, ou le début des données d'une différence de couleur bleue. Ces deux indicateurs sont stockés dans la mémoire 9 en même temps qu'une donnée représentant la luminance ou une différence de couleur, et constituent une instruction pour commander le dispositif 10, codeur de Huffmann et générateur de séparateurs, de manière à coder les données selon huit arbres de Huffmann distincts, et de manière à fournir les séparateurs inter-blocs, les séparateurs intra-blocs, et les séparateurs inter-images. La mémoire 9 possède deux sorties reliées respectivement à deux entrées du dispositif 10, pour lui fournir en parallèle une donnée et une instruction correspondante.

La mémoire 9 possède en outre des entrées de commande d'écriture et de lecture reliées respectivement à des sorties du séquenceur 11 par des liaisons non représentées. Le séquenceur 11 commande la lecture des données, et des instructions correspondantes, au fur et à mesure que le dispositif 10 code et transmet ces données sur le canal. Le dispositif 10 signale au séquenceur 11 sa disponibilité, par une liaison non représentée.

Le dispositif 10 possède une sortie reliée à une entrée parallèle du registre à décalage 12. Le registre 12 possède une sortie reliée à la borne de sortie 16 du dispositif de codage et possède une entrée de commande recevant un signal d'horloge HC qui définit le rythme de transmission sur le canal. Le générateur de synchronisation d'image et de synchronisation de ligne, 13, possède une sortie reliée aussi à la borne de sortie 14 pour fournir des motifs de synchronisation, à la fréquence des images et à la fréquence des lignes. Le générateur 13 est commandé par le séquenceur 11 au moyen d'une liaison non représentée. La transmission des motifs de synchronisation est réalisée tout à fait indépendamment de la transmission des données codées et de leurs séparateurs, en gelant périodiquement la transmission de ces données codées, pour transmettre les motifs de synchronisation. Ces motifs permettront de récupérer, après le décodage, le rythme des images et des lignes, qui est asynchrone par rapport au rythme du canal.

Le dispositif 10 est constitué essentiellement par un séquenceur et par des mémoires mortes. Les mémoires mortes permettent de réaliser un transcodage à partir des données fournies par la mémoire 9, ce transcodage est fonction du type de données et le type de données est indiqué par l'instruction les accompagnant. Le séquenceur est commandé par ces instructions pour sélectionner une mémoire morte correspondant à un code de Huffmann approprié aux données à transcoder. Le séquenceur fournit aussi les mots binaires constituant les séparateurs inter-blocs, les séparateurs intra-bloc, et les séparateurs d'image. Ce séquenceur comporte des compteurs pour déterminer le rang de chaque séparateur d'image, le rang de chaque bloc, modulo 4, et la somme du rang de chaque bloc et du nombre d'événements codés dans ce bloc, modulo 4, afin d'inclure ces valeurs dans les séparateurs, conformément au procédé décrit précédemment.

Le séquenceur 11 fournit des signaux d'horloge à l'ensemble des éléments de ce dispositif de codage et il fournit notamment des signaux de commande aux dispositifs 6 et 7 avec une période correspondant au traitement d'un bloc de 16x16 éléments d'image. Il est à noter que les valeurs représentatives des éléments d'image sont stockées dans la mémoire de trame 2 avec des intervalles de temps d'arrêt correspondant à la suppression de ligne et à la suppression de trame. Mais ces valeurs représentatives sont relues dans la mémoire 2 à une vitesse un peu plus lente, telle que la lecture est réalisée à un rythme régulier sans tenir compte des intervalles de temps de suppression de ligne et de suppression de trame.

Une sortie du dispositif 10 est reliée à une entrée parallèle du registre à décalage 12 pour lui fournir un mot binaire correspondant à une donnée codée ou à un séparateur. Le registre à décalage 12 transmet les bits de ce mot binaire successivement à la borne de sortie 19 sous l'action de l'horloge HC qui correspond au rythme de transmission sur le canal considéré.

Le dispositif 8 fournit un coefficient de pondération qui est le même pour le dispositif 6 de codage de la luminance et pour le dispositif 7 de codage des différences de couleur ; et il fournit un coefficient de quantification qui est le même, à un coefficient multiplicatif près, pour les dispositifs 6 et 7. Ces deux coefficients assurent donc une régulation commune pour le débit des informations à transmettre correspondant à la luminance et pour les informations à transmettre correspondant aux différences de couleurs. La mémoire 9 stocke ensemble ces deux types d'informations à transmettre, ainsi que des indicateurs permettant d'identifier ces différents types d'informations et qui constituent des instructions pour commander le dispositif 10.

La mémoire 9 étant placée en amont du codeur de Huffmann 10, la régulation du flux de bits sur le canal consiste en fait à agir sur l'amplitude des coefficients ou différences de coefficient, par la pondération et la quantification variables, avant de les coder au moyen du codeur de Huffmann. Une réduction de l'amplitude se traduit par une réduction du nombre de bits à la sortie du codeur de Huffmann. Tout se passe comme s'il y avait, à la place de la mémoire 9, du dispositif 10 et du registre 12, seulement une mémoire tampon stockant des données binaires en série et les restituant en série au canal. Le dispositif 14 calcule en fait, non pas le remplissage de la mémoire 9, mais le remplissage de cette mémoire tampon. Le remplissage de la mémoire tampon est égal à la quantité d'informations binaires, sous la forme de codes de Huffmann, restant à transmettre, à l'instant considéré. Il n'y a pas de relation mathématique entre le remplissage de la mémoire 9 et le remplissage de la mémoire tampon. Par conséquent, la capacité de la mémoire 9 est choisie en considérant la longueur moyenne des codes de Huffmann. Dans cet exemple, la longueur moyenne est égale à 2 bits. La mémoire 9 a une capacité de 32K mots, chaque mot étant constitué d'une donnée et d'une instruction, et correspond à une capacité de 64K bits pour la mémoire tampon, telle que définie précédemment.

Le dispositif 15 fournit au dispositif 14 la valeur de la quantité d'informations transmise sur le canal. Les dispositifs 6 et 7 fournissent au dispositif 14 le coût de codage de chaque coefficient ou différence de coefficients. Le dispositif 14 calcule la valeur du remplissage de la mémoire tampon en cumulant les coûts de codage et en soustrayant la quantité transmise. Puis il fournit la valeur du remplissage au dispositif de calcul 8 qui détermine un coefficient de quantification et un coefficient de pondération conformément aux formules (3) à (8), en modulant la sévérité de la quantification et de la pondération en fonction de la classe du bloc, déterminée par le dispositif 5.

Le dispositif de comptage 15 détermine le nombre de bits transmis, à partir du signal d'horloge HC qui lui indique le rythme de transmission sur le canal, lequel est connu et constant mais est asynchrone par rapport au rythme de l'échantillonnage des images. La valeur du rapport de pondération des hautes fréquences par rapport aux basses fréquences correspond aux valeurs représentées sur la figure 2. Le coefficient de quantification de la luminance a une valeur constante pour un remplissage de la mémoire tampon variant de 0 à 56 Kb puis décroît exponentiellement pour un remplissage variant de 56 Kb à 64 Kb.

Le dispositif 5 comporte, en série, entre son entrée et sa sortie : un dispositif 16 de calcul de la luminance moyenne dans des zones périphériques de chaque bloc d'éléments d'image ; un dispositif 17 de détermination de la luminance minimale dans chaque bloc ; et un dispositif 18 de détermination de la classe d'un bloc.

Le dispositif 5 calcule la luminance moyenne dans 12 sous-blocs de 4x4 éléments d'images, à la périphérie de chaque bloc, puis calcule la luminance moyenne dans 12 zones de 4x8 éléments, conformément au procédé décrit précédemment et illustré sur les figures 7 et 8. Le dispositif 17 détermine la valeur minimale parmi les valeurs moyennes calculées par le dispositif 16. Le dispositif 18 compare cette valeur moyenne par rapport à 7 valeurs de seuil fixées et en déduit un mot binaire, dont la valeur peut aller de 0 à 7, et qui constitue le numéro de classe du bloc, traduisant la difficulté de codage et de restitution de ce bloc. Le dispositif 5 est commandé par le séquenceur 11 au moyen de liaisons non représentées. Le dispositif 5 peut être réalisé sous la forme d'un circuit logique câblé ou sous la forme d'un microprocesseur et d'une mémoire de programme. Dans les deux cas, sa réalisation est à la portée de l'Homme de l'Art.

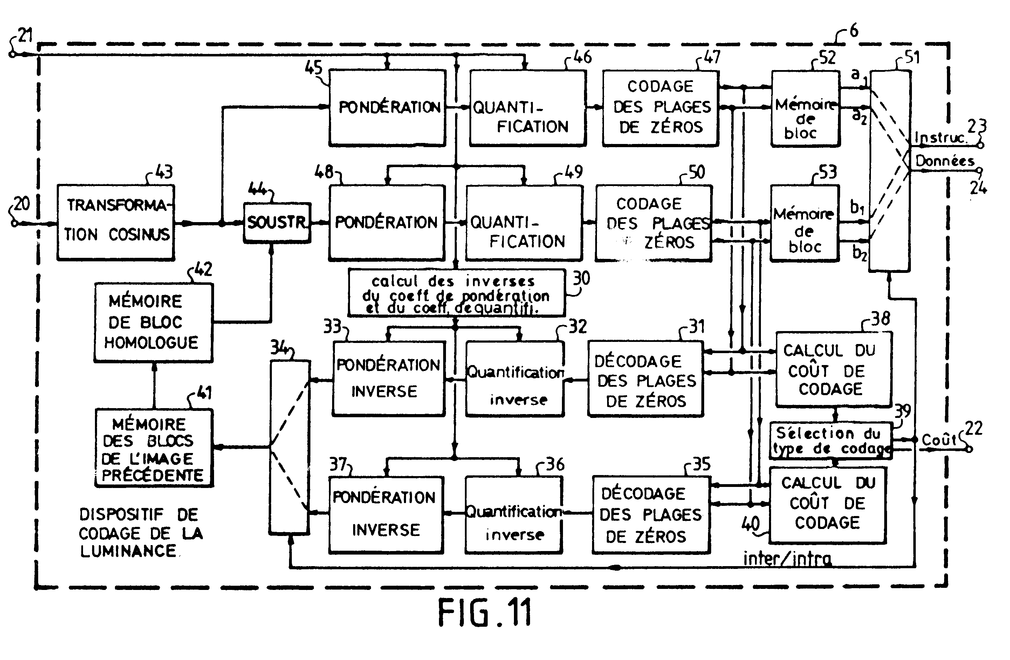

La figure 11 représente le schéma synoptique du dispositif 6 de codage de la luminance. Le dispositif 7 a un schéma synoptique tout à fait analogue. Dans cet exemple de réalisation le dispositif 6 comporte : un dispositif 43 de calcul d'une transformation cosinus bidimensionnelle sur des blocs de dimensions 16x16. Le dispositif 43 possède une entrée reliée à la borne d'entrée 20 pour recevoir successivement les valeurs de luminance correspondant à un bloc d'image. La transformation bidimensionnelle est calculée en deux étapes, correspondant à deux transformations monodimensionnelles, mettant en oeuvre l'algorithme connu de Beyong Gi Lee. Le dispositif 43 peut être réalisé par exemple selon la description de la demande de brevet français n° 2 581 463.

Le dispositif de codage 6 comporte en outre des moyens permettant de calculer parallèlement les coefficients de transformation d'un bloc de valeurs de luminance et les différences entre ces coefficients et les coefficient de transformation du bloc homologue dans la trame précédente. Il réalise les opérations de pondération, de quantification, et de codage des plages de zéros, parallèlement sur les coefficients et sur les différences de coefficients de transformation.

Les coefficients de transformation calculés par le dispositif 43 sont traitées successivement par un dispositif de pondération 45, un dispositif de quantification 46 ; et un dispositif de codage des plages de zéros 47. Ce dernier possède une première et une seconde sortie fournissant respectivement des données codées et un indicateur indiquant le type des données fournies, c'est-à-dire : valeur d'un coefficient de transformation ou longueur d'une plage de zéros. Ces deux sorties sont reliées respectivement à deux entrées d'une mémoire 52 destinée à stocker des données et les indicateurs correspondants, pour un bloc d'éléments d'image codé selon le codage intra-image. La mémoire 52 possède deux sorties de données reliées respectivement à deux entrées $a_1$ et $a_2$ d'un multiplexeur 51, pour lui fournir respectivement un mot de données et un mot indicateur.

Le dispositif 6 comporte aussi un soustracteur 44 ayant une première entrée reliée à la sortie du dispositif 43 pour recevoir la valeur d'un coefficient de transformation et ayant une seconde entrée reliée à une sortie d'une mémoire 42 stockant les valeurs des coefficients de transformation du bloc homologue à celui en cours de traitement, dans la trame codée immédiatement précédemment. Le soustracteur 44 calcule donc la différence entre un coefficient de transformation et le coefficient de transformation homologue dans la trame précédente. Cette différence est traitée ensuite successivement par un dispositif de pondération 48, un dispositif de quantification 49, et un dispositif 50 de codage des plages de zéros. Le dispositif 50 possède deux sorties fournissant respectivement une donnée codée constituée par une différence de coefficients de transformation ou par une longueur de plage de zéros, et fournissant un indicateur correspondant à ce type de données.

Ces deux sorties sont reliées respectivement à deux entrées de données de la mémoire de bloc 53, destinée à stocker des données et les indicateurs correspondants, pour un bloc d'éléments d'image codé selon le codage inter-images. La mémoire 53 possède deux sorties de données reliées respectivement à deux entrées $b_1$ et $b_2$ du multiplexeur 51, pour lui fournir respectivement un mot de données et un mot indicateur, ce dernier constituant une instruction pour commander le dispositif 10.

Le multiplexeur 51 possède une entrée de commande reliée à une sortie d'un dispositif 39 de sélection du type de codage. Il possède en outre deux sorties reliées respectivement aux bornes de sortie 23 et 24 du dispositif 6 pour fournir respectivement une instruction et un mot de données constitué par une valeur de coefficient de transformation, ou une valeur de différence de coefficient de transformation, ou une valeur de longueur de plage de zéros. Selon la valeur d'un signal de commande fourni par le dispositif 39, le multiplexeur 51 relie les entrées $a_1$ et $a_2$ respectivement à ses deux sorties ou bien relie les entrées $b_1$ et $b_2$ respectivement à ses deux sorties, selon que le codage à réaliser est du type intra-image ou inter-images respectivement.

Les dispositifs de pondération 45 et 48, et les dispositifs de quantification 46 et 49 possèdent des entrées de commande reliées à la borne d'entrée 21 du dispositif 6 pour recevoir chacun un mot binaire définissant respectivement le coefficient de pondération et le coefficient de quantification appliqués aux coefficients de transformation et aux différences de coefficients de transformation des valeurs de luminance. La borne d'entrée 21 est reliée aussi à une entrée d'un dispositif 30 de calcul de l'inverse du coefficient de pondération et de l'inverse du coefficient de quantification.

Le dispositif 6 comporte en outre un dispositif 31 de décodage des plages de zéros correspondant aux coefficients de transformation, ce dispositif 31 ayant deux entrées reliées respectivement aux deux sorties du dispositif 47, et ayant une sortie fournissant soit un coefficient de transformation non nul fourni par la première sortie du dispositif 47, soit une suite de valeurs nulles, selon la valeur de l'indicateur fourni par la seconde sortie du dispositif 47. Les valeurs de coefficient de transformation nulles ou non nulles fournies par le dispositif 31 sont traitées ensuite successivement par un dispositif de quantification inverse 32 et par un dispositif de pondération inverse 33, puis sont fournies à une première entrée d'un multiplexeur 34.

Le dispositif 6 comporte en outre un dispositif 35 de décodage des plages de zéros correspondant à des différences de coefficients de transformation, ayant deux entrées reliées respectivement à la première et à la seconde sortie du dispositif 50 pour recevoir respectivement des données, constituées par des différences de coefficient de transformation ou des longueurs de plages de zéros, et des indicateurs indiquant le type de ces données. Le dispositif 35 transmet sans les modifier les différences de coefficient de transformation non nulles, et il fournit une suite de valeurs nulles pour reconstituer les plages de différences de coefficient de transformation nulles. Ces valeurs de différence de coefficients de transformation sont fournies par une sortie du dispositif 35 et sont traitées successivement par un dispositif 36 de quantification inverse et par un dispositif 37 de pondération inverse puis sont appliquées à une seconde entrée du multiplexeur 34.

Les dispositifs de pondération inverse 33 et 37, et les dispositifs de quantification inverse 32 et 36 possèdent des entrées de commande reliées à une sortie du dispositif 30 pour recevoir respectivement le coefficient de pondération inverse et le coefficient de quantification inverse correspondant aux valeurs de luminance du bloc en cours de traitement, qui sont calculés par le dispositif 30. Le multiplexeur 34 possède une sortie qui est reliée soit à sa première entrée soit à sa seconde entrée, selon la valeur d'un signal binaire appliqué à une entrée de commande qui est relié à la sortie du dispositif 39 de sélection du type de codage. La sortie du multiplexeur 34 est reliée à une entrée de données d'une mémoire 41 stockant les valeurs des coefficients de transformation de tous les blocs d'éléments d'image de la trame ayant été traitée immédiatement précédemment.

Une sortie de données de la mémoire 41 est reliée à une entrée de données d'une mémoire 42 stockant uniquement les coefficients de transformation du bloc homologue du bloc d'éléments d'image en cours de traitement, dans la trame précédente. Les mémoires 41 et 42 possèdent des entrées de commande d'écriture et de lecture reliées à des sorties du séquenceur 11 par des liaisons non représentées. Une sortie de données de la mémoire 42 est reliée à la seconde entrée du soustracteur 44 pour lui fournir la valeur des coefficients de transformation du bloc homologue, dans un ordre correspondant à l'ordre des coefficients de transformation calculés par le dispositif 43, cet ordre étant par exemple l'ordre en zigzag représenté sur la figure 1. La mémoire 42 et la mémoire 41 jouent le rôle d'une ligne à retard numérique procurant un retard d'une trame.

Le dispositif 6 comporte en outre un dispositif 38 de calcul du coût de codage intra-image et un dispositif 40 de calcul du coût de codage inter-images, pour un même bloc d'éléments d'image. Le dispositif 38 possède deux entrées reliées respectivement aux deux sorties du dispositif 47 et possède une sortie reliée à une entrée du dispositif 39 de sélection du type de codage. Le dispositif 40 possède deux entrées reliées respectivement aux deux sorties du dispositif de codage 50 et possède une sortie reliée à une autre entrée du dispositif 39. Les dispositifs 38 et 40 calculent un coût de codage tenant compte des séparateurs inter-blocs, intra-bloc, et inter-images ; et tenant compte des mots de code de Huffmann utilisés pour coder chaque coefficient de transformation, chaque différence de coefficient de transformation, et chaque plage de zéros. Le dispositif de sélection 39 reçoit donc simultanément deux mots binaires indiquant le coût de codage par le codage intra-image et par le codage inter-images.

Le dispositif 39 détermine quel est le coût le moins élevé et il sélectionne en principe le type de codage correspondant à ce coût. Mais il peut aussi imposer un codage intra-image. Le dispositif 39 possède une première sortie reliée aux entrées de commande des multiplexeurs 34 et 51 pour commander le codage inter-images ou le codage intra-image ; et possède une seconde sortie reliée à la borne de sortie 22 pour fournir le coût de codage du bloc. Ce coût est utilisé pour calculer le remplissage de la mémoire tampon virtuelle.

Pour comparer les coûts de codage et pour imposer le codage intra-image dans certains cas, le dispositif 39 peut être constitué d'un microprocesseur et d'une mémoire morte contenant un programme correspondant à la mise en oeuvre de ce procédé.

Le procédé de forçage comporte trois critères. Un première critère consiste : à calculer la différence entre le coût de codage intra-image et le coût de codage inter-images ; puis à diviser cette différence par le coût du codage inter-image ; puis à comparer le résultat à une première valeur de seuil variable. Cette première valeur de seuil est calculée en comptant le nombre $N(i,j)$ des blocs ayant les coordonnées $(i,j)$ et ayant été codées par un codage inter-images depuis la dernière fois où un bloc de coordonnées $(i,j)$ a été codé par un codage intra-image ; puis en calculant une fonction de $N(i,j)$ divisée par une constante. Cette fonction peut être $N^2(i,j)$, par exemple.

Un deuxième critère de forçage consiste à comparer le nombre $N(i,j)$ par rapport à une deuxième valeur de seuil, $N_0$ , qui est fixée à 30 par exemple. Le codage est forcé en un codage intra-image lorsque $N(i,j)$ dépasse 30.

Un troisième critère, destiné à étaler les opérations de forçage dans le temps, consiste à ne permettre le forçage que pour les blocs dont le numéro, dans la trame considérée, est égal à une valeur $N_1$ modulo 4. La valeur $N_1$ est une valeur entière variant de 0 à 3 et changeant à chaque trame.

La réalisation de ce programme de calculs pour un microprocesseur est à la portée de l'Homme de l'Art.

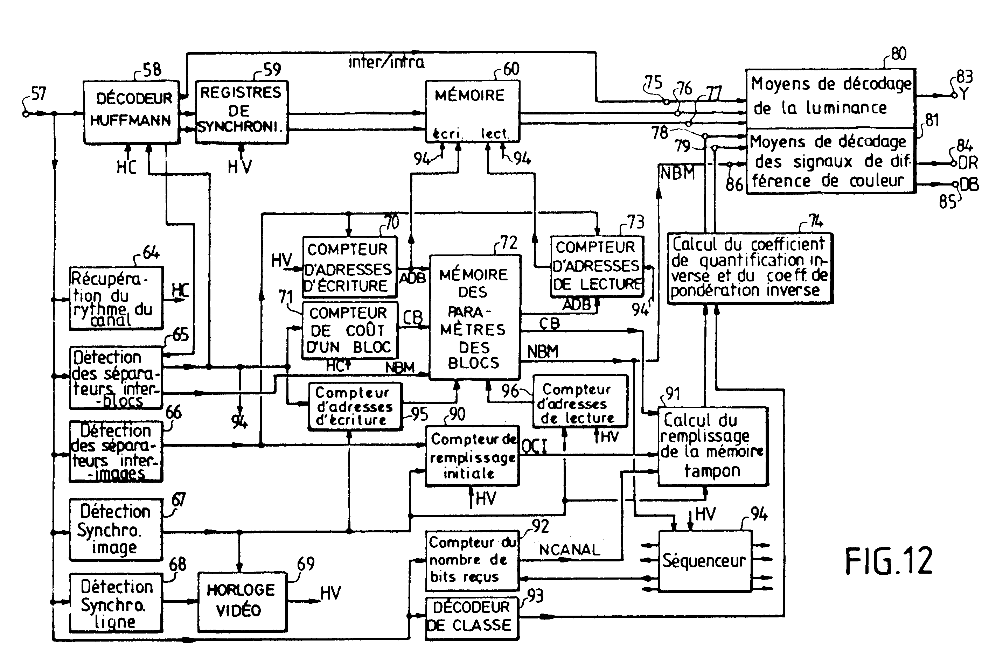

La figure 12 représente le schéma synoptique d'un exemple de réalisation d'un décodeur d'images pour la mise en oeuvre du procédé selon l'invention. Cet exemple comporte : une borne d'entrée 57 reliée à un canal de transmission ; un décodeur de Huffmann 58 ; un ensemble 59 de registres de synchronisation ; une mémoire 60 ; des moyens 80 de décodage de la luminance ; des moyens 81 de décodage des signaux de différence de couleur ; un dispositif 64 de récupération du rythme du canal ; un dispositif 65 de détection des séparateurs inter-blocs ; un dispositif 66 de détection des séparateurs inter-images ; un dispositif 67 de détection des motifs de synchronisation d'image ; un dispositif 68 de détection des motifs de synchronisation de ligne ; une horloge 69, au rythme des signaux vidéo ; un compteur 70 d'adresses d'écriture de la mémoire tampon ; un compteur 71 de coût d'un bloc ; une mémoire 72 de stockage des paramètres d'un bloc ; un compteur 73 d'adresses de lecture de la mémoire tampon ; un dispositif 74 de calcul du coefficient de quantification inverse et du coefficient de pondération inverse ; un compteur 90 de remplissage initial ; un dispositif 91 de calcul du remplissage de la mémoire tampon constitué par la mémoire 60, le décodeur 58, et les registres 59 ; un compteur 92 du nombre de bits reçus ; un décodeur de classe 93 ; un séquenceur 94 ; un compteur 95 d'adresses d'écriture de la mémoire de paramètres ; un compteur 96 d'adresses de lecture de la mémoire de paramètres ; et trois bornes de sortie, 83 à 85, fournissant respectivement une valeur de luminance Y, une valeur de différence de couleur rouge DR, et une valeur de différence de couleur bleue DB.

Le dispositif 67 de détection des motifs de synchronisation d'image et le dispositif 68 de détection des motifs de synchronisation de ligne ont des entrées reliées à la borne d'entrée 57 et ont des sorties reliées respectivement à deux entrées de l'horloge 69. L'horloge 69 fournit un signal d'horloge HV qui déterminera le rythme des valeurs de luminance, et des valeurs de différence de couleur restituées par le décodeur.

Le séquenceur 94 fournit des signaux de commande à tous les éléments du dispositif de décodage en synchronisme avec le signal d'horloge vidéo. Pour simplifier, ce schéma synoptique ne mentionne qu'un seul type de signal d'horloge vidéo, noté HV, mais il y a en fait plusieurs signaux d'horloge vidéo ayant des fréquences sous-multiples de la fréquence d'échantillonnage du signal de luminance. La réalisation de ces signaux d'horloge est à la portée de l'Homme de l'Art.

Le dispositif 64 de récupération du rythme du canal possède une entrée reliée à la borne d'entrée 57 et possède une sortie fournissant un signal d'horloge HC correspondant au rythme des bits transmis sur le canal. Ce signal d'horloge est appliqué notamment à une entrée d'horloge du compteur 71 de coût d'un bloc pour compter le nombre de bits correspondant à chaque bloc reçu.

Le décodeur de Huffmann 58 possède une entrée, reliée à un canal de transmission par la borne d'entrée 57, pour recevoir une suite de valeurs binaires à un rythme constant de 10 Mb par seconde, suite transmise par un dispositif de codage tel que celui décrit précédemment. Il possède aussi une entrée d'horloge recevant le signal d'horloge HC, et une entrée de synchronisation reliée à une première sortie du dispositif 65 de détection des séparateurs inter-blocs. Ce dernier fournit un signal qui réinitialise le décodeur 58 au début de la transmission des données codées de chaque bloc. Le décodeur 58 ne peut décoder un mot de code correspondant à un événement que s'il a correctement décodé le mot de code correspondant à l'événement qui précède. En cas d'erreur de transmission, le décodeur de Huffmann reste désynchronisé jusqu'à la détection du prochain séparateur inter-blocs.

Le dispositif 65 a une entrée reliée à la borne d'entrée 57 pour recevoir les bits transmis et à une entrée reliée à une sortie du décodeur 68 pour recevoir un signal logique chaque fois que décodeur 58 a décodé un événement.

Le dispositif 65 a pour fonction de reconnaître chaque séparateur inter-blocs grâce au motif constituant le radical, et de vérifier l'absence d'erreur de transmission grâce aux deux mots binaires qui suivent le radical. Pour cela, il compare le rang du bloc, modulo 4, transmis dans le séparateur inter-blocs, et le rang du bloc compté d'après le nombre de séparateurs reçus précédemment. En outre le dispositif 65 vérifie le nombre de mots de code reçus, c'est-à-dire le nombre d'événements dans le bloc précédent, en comparant la valeur transmise de la somme du rang du bloc et du nombre d'événements, modulo 4, avec la somme calculée du nombre de blocs détectés précédemment et du nombre d'événements détectés précédemment, modulo 4. Un séparateur inter-blocs est reconnu comme valide par le dispositif 65 lorsqu'il est suivi de deux autres séparateurs inter-blocs vérifiant ces deux conditions.

Lorsqu'une de ces trois vérifications donne un résultat négatif, une deuxième sortie du dispositif de détection 65 fournit un ordre de masquage constitué par un mot binaire NBM indiquant le nombre de blocs à masquer, à une première entrée de la mémoire 72. L'association de cette détection d'erreur et du procédé de masquage des blocs erronés permet de remédier aux transmissions erronées, dans la grande majorité des cas.

En général, des dispositifs correcteurs d'erreurs, adaptés au type de canal, sont intercalés respectivement entre la borne de sortie 19 du dispositif de codage et la borne d'entrée 57 du dispositif de décodage. Ces dispositifs sont classiques et ne sont pas représentés sur les figures. Ils permettent de corriger les petits paquets d'erreurs, au moyen d'une petite redondance des bits transmis. Les vérifications réalisées par le dispositif 65 de détection des séparateurs inter-blocs permettent de détecter les erreurs qui subsistent. Celles-ci peuvent être graves pour l'image restituée, car elles peuvent fausser non seulement la luminance ou les couleurs d'un bloc mais peuvent affecter la position de l'ensemble du bloc si un séparateur inter-blocs n'est pas reconnu. La vérification du rang de chaque séparateur inter-blocs et la vérification du nombre d'événements décodés permet de calculer exactement le nombre NBM des blocs à masquer et permet donc de les masquer et de restituer une image de qualité bien meilleure que si des blocs étaient restitués à des positions inexactes.

La première sortie du dispositif 65 est reliée aussi à une entrée de remise à zéro du compteur 71 de coût d'un bloc ; à une entrée d'horloge du compteur 95 d'adresses d'écriture de la mémoire 72 ; et à une entrée du séquenceur 94, par une liaison non représentée.

Lorsqu'un séparateur inter-blocs est valide, le signal binaire fourni par la première sortie du dispositif 65 réinitialise le décodeur de Huffmann 58, remet à zéro le compteur 71 de coût d'un bloc, incrémente d'une unité le compteur 95 d'adresses d'écriture, et déclenche le séquenceur 94 pour qu'il commande une écriture, dans la mémoire 72, des paramètres du bloc qui est reconnu valide. Les paramètres inscrits dans la mémoire 72 sont : l'adresse, ADB, d'écriture du premier mot des données codées du bloc, dans la mémoire 60 ; le coût de ce bloc, CB, c'est-à-dire le nombre de bits entre les deux séparateurs inter-blocs encadrant ces données ; et la valeur de MBN qui est égale au nombre de blocs à masquer éventuellement, ce nombre étant nul lorsqu'il n'y pas de bloc à masquer. Ces trois paramètres sont fournis respectivement par la sortie du compteur 70 d'adresses d'écriture de la mémoire tampon ; la sortie du compteur 71 de coût d'un bloc ; et par la troisième sortie du dispositif 65 détecteur de séparateurs inter-blocs. Ces trois sorties sont reliées respectivement à trois entrées de données de la mémoire 72. Cette dernière possède une première, une deuxième, et une troisième sortie de données pour restituer respectivement les valeurs de ces trois paramètres. Elle possède aussi des entrées de commande de lecture et d'écriture reliées à des sorties du séquenceur 94 par des liaisons non représentées.

Lorsqu'un séparateur inter-blocs est reconnu valide, le séquenceur 94 commande une écriture dans la mémoire 72 pour stocker les paramètres du bloc qui suit ce séparateur. Le compteur d'adresses d'écriture 95 possède une sortie reliée à une entrée d'adresse d'écriture de la mémoire 72 pour lui fournir une adresse d'écriture des paramètres chaque fois qu'un séparateur inter-bloc est validé. Lorsqu'un ou plusieurs séparateurs inter-blocs ne sont pas reconnus valides, un seul jeu de paramètres est inscrit dans la mémoire 72 pour les données de plusieurs blocs, car tout se passe comme si les données correspondaient à un bloc unique. Ces données sont stockées dans la mémoire tampon 60 bien qu'elles soient erronées, et elles sont lues dans la mémoire 60, mais elles ne sont pas utilisées pour restituer une image. Le compteur 95 possède aussi une entrée de remise à zéro reliée à la sortie du dispositif 67 de détection de la synchronisation d'image, pour être remis à zéro au début de chaque image.

La sortie du compteur 70 d'adresses d'écriture est reliée aussi à une entrée d'adresse d'écriture de la mémoire tampon 60. Une entrée de chargement du compteur d'adresses de lecture, 73, est reliée à la première sortie de données de la mémoire 72 pour recevoir une adresse de début de bloc, ADB ; et possède une sortie reliée à une entrée d'adresse de lecture de la mémoire tampon 60. Le compteur 70 possède une entrée d'horloge recevant le signal d'horloge vidéo HV, et possède une entrée de remise à zéro reliée à la sortie du dispositif 67. La sortie du dispositif 67 est reliée aussi à une entrée de remise à zéro du compteur 73 d'adresses de lecture de la mémoire tampon. Le compteur 73 possède une entrée d'horloge reliée à une sortie du séquenceur 94 par une liaison non représentée.

La deuxième sortie de la mémoire 72 est reliée à une entrée du dispositif 91 de calcul du remplissage de la mémoire tampon pour lui fournir le coût d'un bloc, CB. La troisième sortie de la mémoire 72 est reliée à une entrée du séquenceur 94 et à une borne d'entrée 86 des moyens 80 et 81 pour leur fournir la valeur du nombre de blocs à masquer, NBM.

Le décodeur de Huffmann 58 possède une première et une seconde sortie reliées respectivement à deux entrées de registres 59 qui sont dits de synchronisation car ils permettent de synchroniser les données codées sur l'horloge vidéo HV, alors que le décodeur de Huffmann 58 fonctionne au rythme de l'horloge du canal HC. Le décodeur 58 possède une troisième sortie fournissant un signal binaire de sélection de codage : codage inter-images ou codage intra-image, à une borne d'entrée 75 des moyens 80 et 81. Deux sorties des registres de synchronisation 59 sont reliées respectivement à deux entrées de données de la mémoire tampon 60, correspondant respectivement à des données codées et à un mot binaire d'instruction indiquant le type des données codées. La mémoire tampon 60 possède une première et une seconde sortie reliées respectivement à des bornes d'entrée 77 et 76 des moyens 80 et 81, pour leur fournir respectivement des données codées et un mot binaire d'instruction.

La mémoire 60 possède en outre une entrée d'horloge d'écriture et une entrée d'horloge de lecture reliées respectivement à deux sorties du séquenceur 94 par des liaisons non représentées. Lorsqu'un séparateur inter-bloc a été reconnu valide, le séquenceur 94 commande l'écriture, dans la mémoire 60, des données codées correspondant à au moins un bloc, dans une suite d'adresses fournie par le compteur 70, à la suite de l'adresse de début du bloc ADB, qui est la seule stockée dans la mémoire 72.

Pour la lecture des données codées stockées dans la mémoire 60, le séquenceur 94 commande, pour chaque bloc, ou ensemble de blocs (si une erreur a été détectée) :
- une lecture, dans la mémoire 72, de l'adresse ADB correspondant au début du bloc ;
- un chargement de cette adresse dans le compteur d'adresses de lecture 73 ;
- une lecture à l'adresse ADB, dans la mémoire tampon 60, l'adresse ADB étant fournie à l'entrée d'adresse de lecture par le compteur 73 ;
- une suite d'incrémentations du contenu du compteur 73 ;
- une suite de lectures, dans la mémoire tampon 60, aux adresses fournies par le compteur 73.

La mémoire 60 étant placée en aval du décodeur de Huffmann 58, tout se passe comme si, à la place du décodeur 58 et de la mémoire 60, il y avait une mémoire tampon stockant en série les données binaires transmises par le canal et les restituant en série. Le dispositif de calcul 91 calcule en fait le remplissage de cette mémoire tampon, qui n'est lié par aucune relation mathématique au remplissage de la mémoire 60 car cette dernière contient des mots binaires fournis par le décodeur de Huffmann. Le remplissage de la mémoire tampon est égal à la quantité d'informations binaires, sous la forme de codes de Huffmann, qui reste à décoder, à l'instant considéré. La capacité de la mémoire 60 est identique à la capacité de la mémoire 9 du dispositif de codage et est suffisante dans tous les cas. Dans cet exemple elle est égale à 32K mots, chaque mot étant constitué d'une donnée et d'une instruction.

Le dispositif 74 de calcul du coefficient de quantification et du coefficient de pondération possède deux sorties reliées respectivement à des bornes d'entrée 78 et 79 des moyens 80 et 81, et possède deux entrées reliées respectivement à une sortie du dispositif de calcul 91 et à une sortie du décodeur de classification 93. Le dispositif de calcul 91 possède une première entrée reliée à la deuxième sortie de données de la mémoire 72, fournissant un mot binaire CB qui est le coût de codage d'un bloc ; une deuxième entrée reliée à une sortie du compteur de remplissage initial 90, fournissant une valeur OCI ; une troisième entrée reliée à une sortie du compteur 92, fournissant le nombre de bits reçus NCANAL ; et une quatrième entrée, de remise à zéro, reliée à une sortie du dispositif 67 de détection de la synchronisation d'image.

Le compteur de remplissage initial, 90, possède une entrée d'horloge recevant le signal d'horloge vidéo HV ; une entrée d'arrêt reliée à la sortie du dispositif 66 de détection des séparateurs inter-images ; et une entrée de remise à zéro, reliée à la sortie du dispositif 67 de détection des motifs de synchronisation d'image. Le compteur 90 compte le nombre de bits fournis par le canal à la mémoire tampon, entre l'instant où est détecté un motif de synchronisation image et l'instant où est détecté un séparateur inter-images. Le résultat de ce comptage constitue la valeur du remplissage initial OCI de la mémoire tampon, au début de chaque image.

Le compteur 92 du nombre de bits reçus possède une entrée reliée à la borne d'entrée 57 et une entrée reliée à une sortie du séquenceur 94. Le compteur 92 mesure le nombre exact de bits reçus par la mémoire tampon depuis le début d'un bloc, ce nombre n'étant pas connu, à l'avance, de manière précise car le canal est asynchrone. Le compteur 92 est remis à zéro par un signal fourni par le séquenceur 94, en principe au début de la réception de chaque bloc, mais le séquenceur 94 saute une ou plusieurs remises à zéro lorsque le mot binaire NBM n'est pas nul, c'est-à-dire lorsque il y a au moins un bloc à masquer. Par exemple s'il y a deux blocs à masquer, le séquenceur 94 ne commande une remise à zéro du compteur 92 qu'à la fin du deuxième bloc masqué.

Le décodeur de classe 93 possède une entrée reliée à la borne d'entrée 57 pour décoder un mot binaire indiquant une classe et situé juste après chaque séparateur inter-blocs. Il fournit ce mot binaire au dispositif de calcul 74 qui en tient compte pour calculer le coefficient de quantification et le coefficient de pondération inverse, de la même manière que le dispositif de calcul des coefficients de quantification et de pondération dans le dispositif de codage décrit précédemment.

Le dispositif 74 de calcul du coefficient de quantification inverse et du coefficient de pondération inverse fonctionne de manière analogue au dispositif 30 de calcul du coefficient de quantification et du coefficient de pondération, mais il réalise en plus le calcul de l'inverse du coefficient de quantification et de l'inverse du coefficient de pondération obtenus par les formules (3) à (8).

Dans ces formules le remplissage de la mémoire tampon du dispositif de codage est remplacé par une valeur qui est égale à une constante moins le remplissage de la mémoire tampon du dispositif de décodage. En effet, la somme du remplissage de ces deux mémoires tampons est égale à une constante lorsque la régulation fonctionne bien dans le dispositif de codage et dans le dispositif de décodage, cette régulation ayant pour conséquence que chaque donnée codée subit un retard constant entre l'instant où elle entre dans la mémoire tampon du dispositif de codage et l'instant où elle sort de la mémoire tampon du dispositif de décodage, puisque le débit du canal est constant. Ce retard correspond à la valeur constante de la somme des deux remplissages.

Cette constante est déterminée en mesurant le remplissage initial OCI de la mémoire tampon du dispositif de décodage, au moyen du compteur 90 de remplissage initial, qui mesure le nombre de bits entrant dans le dispositif 58 entre l'instant où le dispositif 67 détecte le motif de synchronisation image, qui est transmis indépendamment du flot de données codées, et l'instant où le dispositif 66 détecte la présence d'un séparateur inter-images dans les données codées arrivant à l'entrée du dispositif 58. Le maintien de la complémentarité du remplissage des deux mémoires tampons permet de calculer avec exactitude le coefficient de quantification inverse et le coefficient de pondération inverse, dans le décodeur. Aucune information traduisant le remplissage de la mémoire tampon n'est envoyée en clair sur le canal de transmission, par conséquent cette information n'est pas perturbée par les erreurs.

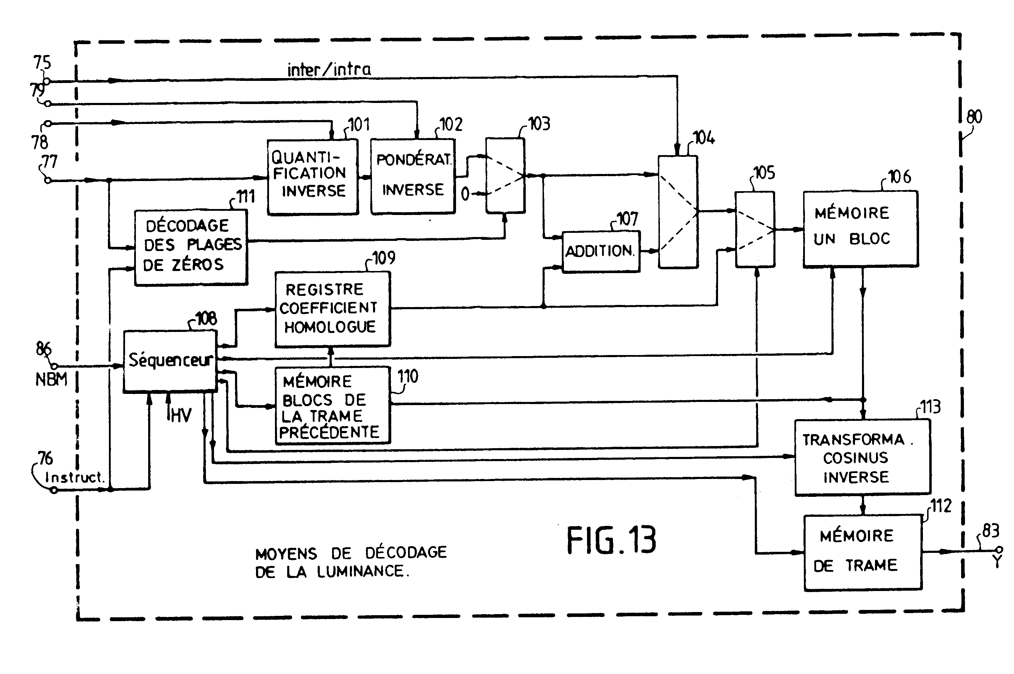

La figure 13 représente le schéma synoptique plus détaillé des moyens 80 de décodage de la luminance. Les moyens 81 ont un schéma analogue, et sont utilisés alternativement pour décoder les signaux de différence de couleur rouge et les signaux de différence de couleur bleue. Les moyens 80 comportent : un dispositif 101 de quantification inverse ; un dispositif 102 de pondération inverse ; trois multiplexeurs 103 à 105, à deux entrées et une sortie ; une mémoire 106 stockant un bloc de coefficients de transformation ; un additionneur 107 ; un séquenceur 108 ; un registre 109 pour stocker un coefficient homologue ; une mémoire 110 pour stocker les blocs de coefficient homologues de la trame précédant la trame courante ; un dispositif 111 de décodage des plages de zéros ; une mémoire de trame 112 ; et un dispositif 113 de calcul de transformées cosinus inverses bidimensionnelles.

Le dispositif 101 possède une entrée de données reliée à la borne d'entrée 77 qui reçoit des données codées fournies par la mémoire tampon 60, et possède une entrée de commande reliée à la borne d'entrée 78 qui reçoit la valeur d'un coefficient de quantification inverse calculé par le dispositif 74. Une sortie du dispositif 101 est reliée à une entrée du dispositif 102. Ce dernier possède aussi une entrée reliée à la borne d'entrée 79 pour recevoir la valeur d'un coefficient de pondération inverse calculée par le dispositif 74, et possède une sortie reliée à une première entrée du multiplexeur 103. Le multiplexeur 103 possède une seconde entrée recevant en permanence une valeur nulle, et possède une sortie qui est reliée soit à la première entrée soit à la seconde entrée, selon la valeur d'un signal binaire appliqué à une entrée de commande, reliée à une sortie du dispositif 111.

Le dispositif 111 décode les plages de zéros à partir des données et à partir d'une instruction, appliquées respectivement sur une première et une seconde entrée qui sont reliées respectivement à la borne d'entrée 77 et à la borne d'entrée 76 des moyens 80. La sortie du multiplexeur 103 fournit donc la valeur d'un coefficient ou d'une différence de coefficient de transformation. Elle est reliée à une première entrée du multiplexeur 104 et à une première entrée de l'additionneur 107. Une seconde entrée de l'additionneur 107 est reliée à une sortie du registre 109 qui lui fournit la valeur du coefficient de transformation homologue du coefficient en cours de décodage, dans l'image précédant l'image en cours de décodage.

La sortie de l'additionneur 107 fournit donc la valeur d'un coefficient de transformation lorsque sa première entrée reçoit la valeur d'une différence de coefficient de transformation. Cette sortie est reliée à la seconde entrée du multiplexeur 104. Le multiplexeur 104 possède une entrée de commande reliée à la borne d'entrée 75 pour recevoir la valeur d'un bit de commande sélectionnant un décodage inter-images ou intra-image, et il possède une sortie reliée à une première entrée du multiplexeur 105. Une seconde entrée du multiplexeur 105 est reliée à la sortie du registre 109 pour recevoir la valeur du coefficient homologue du coefficient en cours de décodage. Une entrée de commande du multiplexeur 105 est reliée à une sortie du séquenceur 108 pour recevoir éventuellement un signal de commande de masquage. Lorsque ce signal de masquage est appliqué au multiplexeur 105, ce dernier transmet la valeur du coefficient homologue fourni par le registre 109, au lieu de transmettre la valeur du coefficient de transformation fournie par le multiplexeur 104.

La sortie du multiplexeur 105 est reliée à une entrée de données de la mémoire 106. La mémoire 106 possède des entrées de commande d'écriture et de lecture reliées respectivement à des sorties du séquenceur 108, ce dernier commandant la mémoire 106 pour stocker tous les coefficients de transformation d'un bloc avant de commander la transformation cosinus inverse de ces coefficients. Le séquenceur 108 possède une entrée recevant le signal d'horloge vidéo HV, une entrée reliée à la borne d'entrée 76 pour recevoir une instruction fonction du type des données à décoder et une entrée reliée à la borne d'entrée 86 pour recevoir la valeur NBM du nombre de blocs à masquer. Si NBM = 0 le séquenceur 108 ne commande pas de masquage. Si NBM est différent de 0, le séquenceur 108 commande le masquage du nombre de blocs indiqués.

La mémoire 110 possède une entrée de données reliée à une sortie de données de la mémoire 106 pour stocker tous les blocs de coefficients de transformation résultant du décodage d'une trame, afin de pouvoir fournir les coefficients homologues des coefficients de transformation de la trame qui suivra. La mémoire 110 possède une sortie de données reliée à une entrée de données du registre 109, et possède des entrées de commande de lecture et d'écriture reliées à des sorties du séquenceur 108.

La sortie de données de la mémoire 106 est reliée aussi à une entrée du dispositif de calcul 113. Ce dernier possède une entrée de remise à zéro reliée à une sortie du séquenceur 108, et possède une sortie reliée à une entrée de données de la mémoire d'image 112. La mémoire de trame 112 possède une entrée de commande de lecture et d'écriture reliée à des sorties du séquenceur 108 et possède une sortie de données reliée à la borne de sortie 83 du décodeur, pour fournir une suite de valeurs de luminance Y. La mémoire de trame 112 a pour rôle de reconstituer la suite de valeurs de luminance dans l'ordre classique de balayage d'une trame alors que le dispositif de calcul 113 fournit les valeurs de luminance décodées dans l'ordre de découpage des blocs dans la trame. La réalisation du dispositif de calcul 113 pour réaliser des transformations cosinus inverse est classique. Il peut être réalisé selon la description donnée dans la demande de brevet français FR-A-2 581 463.

**Revendications**

1. Procédé adaptatif de codage et de décodage d'une suite d'images par transformation, le codage consistant à :
   - diviser chaque image en blocs d'éléments d'image, chaque bloc étant représenté par un bloc de valeurs de luminance, un bloc de valeurs de différence de couleur bleue, et un bloc de valeurs de différence de couleur rouge ;
   - appliquer une transformation bidimensionnelle à chaque bloc de valeurs, pour obtenir un bloc de coefficients de transformation du bloc de valeurs considéré ;
   - transmettre, pour chaque bloc de valeurs, soit la valeur des coefficients de transformation du bloc, soit la différence de valeur de ces coefficients de transformation, par rapport à la valeur des coefficients de transformation d'un bloc homologue dans l'image précédant l'image en cours de codage, de façon à minimiser la quantité d'informations à transmettre pour le bloc considéré, le codage étant dit intra-image ou inter-images respectivement ;
   - multiplier chaque coefficient de transformation ou chaque différence de coefficients de transformation, par un coefficient, dit de pondération, fonction du rang de ce coefficient de transformation ou de cette différence de coefficients de transformation;
   - réguler le débit des informations transmises, en stockant dans une même mémoire tampon, les informations à transmettre correspondant aux trois types de blocs de valeurs, et en multipliant les coefficients de transformation et les différences de coefficients de transformation des 3 types de blocs, par un coefficient, dit de quantification, variable en fonction de la quantité d'informations à transmettre :

le décodage consistant pour chaque bloc, à :

- multiplier chaque valeur transmise de coefficient de transformation ou chaque valeur transmise de différence de coefficients de transformation, par un coefficient égal à l'inverse du coefficient de pondération utilisé pour le codage et par un coefficient égal à l'inverse du coefficient de quantification utilisé pour le codage ;
- additionner, à la valeur de chaque différence de coefficients de transformation, la valeur d'un coefficient de transformation, homologue du coefficient considéré dans un bloc homologue du bloc considéré et appartenant à l'image précédant l'image en cours de décodage ;
- appliquer à chaque coefficient de transformation une transformation inverse de la transformation appliquée pour le codage, pour obtenir un bloc de valeurs représentant une portion d'image décodée ;

caractérisé en ce que, pour réguler le débit, le coefficient de pondération est variable aussi en fonction de la quantité d'informations à transmettre, de façon à réduire le poids donné aux coefficients et aux différences de coefficients correspondant aux fréquences spatiales élevées, lorsque la quantité d'informations à transmettre augmente.

2. Procédé selon la revendication 1, caractérisé en ce qu'il consiste en outre à calculer la luminance moyenne dans une pluralité de zones situées à la périphérie de chaque bloc d'éléments d'image ; et à déterminer pour chaque bloc, la valeur minimale parmi ces valeurs moyennes ; et en ce que le coefficient de pondération et le coefficient de quantification de chaque bloc sont variables aussi en fonction de la luminance minimale ainsi déterminée.

3. Procédé selon la revendication 1, consistant en outre : à coder les valeurs non nulles de coefficients de transformation ou de différences de coefficients de transformation, avant de les transmettre, au moyen de codes de Huffmann ; et à coder par plages les valeurs nulles de coefficients de transformation ou de différences de coefficients de transformation, sauf la dernière plage ; les coefficients ou les différences de coefficient étant considérés successivement selon un ordre de balayage prédéterminé, et la longueur des plages étant codée par un code de Huffmann ; caractérisé en ce qu'il consiste en outre à utiliser pour les valeurs de luminance, et respectivement pour les valeurs de différence de couleur, quatre codes de Huffmann distincts pour :
   - les valeurs non nulles de coefficients qui ne sont pas précédées d'au moins une valeur nulle, dans l'ordre de balayage des coefficients ;
   - les valeurs non nulles des différences de coefficients qui ne sont pas précédées d'au moins une valeur nulle, dans l'ordre de balayage des différences de coefficients ;
   - les valeurs non nulles de coefficients qui sont précédées d'au moins une valeur nulle, dans l'ordre de balayage des différences de coefficients ;
   - les valeurs non nulles des différences de coefficients qui sont précédées d'au moins une valeur nulle, dans l'ordre de balayage des différences de coefficients.

4. Procédé selon la revendication 1, consistant en outre à imposer le codage intra-image pour certains blocs, bien qu'il procure un coût de codage plus élevé que le codage inter-images, pour ces blocs, afin de limiter la propagation des erreurs, caractérisé en ce qu'il consiste à imposer le codage intra-image pour un bloc donné, lorsque la différence relative du coût de codage inter-image et du coût de codage intra-image est inférieure à une première valeur de seuil, ou bien lorsque le bloc donné n'a pas été codé par un codage intra-image depuis un nombre d'images N(i,j) supérieur à une seconde valeur de seuil fixée.

5. Procédé selon la revendication 4, caractérisé en ce que la première valeur de seuil est variable, et décroissante en fonction du nombre d'images N(i,j) depuis lequel le bloc considéré n'a pas été codé par un codage intra-images.

6. Procédé selon la revendication 4, caractérisé en ce que, pour étaler dans le temps les codages intra-image imposés, il consiste en outre à n'imposer un codage intra-image que pour des blocs successifs séparés d'un intervalle supérieur à une troisième valeur de seuil fixée.

7. Procédé selon la revendication 1, caractérisé en ce qu'il consiste en outre, à insérer, entre les données codées correspondant à deux images consécutives, une pluralité de mots dits séparateurs d'images, chacun comportant un motif fixé, inimitable par toutes les concaténations licites des données codées,

EP 0 323 362 B1

et un mot binaire traduisant le rang du séparateur considéré, modulo un nombre fixé.

**8.** Procédé selon la revendication 1, caractérisé en ce qu'il consiste en outre à insérer entre les données codées correspondant à deux blocs consécutifs, un mot binaire dit séparateur inter-blocs comportant un motif fixé inimitable par toutes les concaténations licites des données codées ; un mot binaire traduisant le rang du bloc suivant, modulo un nombre fixé ; et un mot binaire traduisant la somme du rang du bloc suivant et du nombre d'événements représentés par les données codées du bloc suivant, modulo un nombre fixé.

**9.** Dispositif de codage d'une suite d'images, par transformation, pour la mise en oeuvre du procédé selon la revendication 1, chaque élément d'image étant représenté par une valeur de luminance, une valeur de différence de couleur rouge, et une valeur de différence de couleur bleue, comportant :
- des moyens de codage (6, 7) pour calculer un bloc de coefficients de transformation ou de différences de coefficient de transformation, pour chaque bloc de valeurs de luminance et pour chaque bloc de valeurs de différence de couleur ; et pour multiplier ces coefficients et ces différences de coefficients par un coefficient dit de pondération et par un coefficient dit de quantification, le premier étant fonction du rang du coefficient, ou de la différence de coefficients de transformation, dans son bloc, et le second étant identique pour tous les coefficients ou différences de coefficients d'un bloc, et étant fonction de la quantité d'informations à transmettre ;
- des moyens pour réguler la quantité d'informations à transmettre, comportant une mémoire (9) commune pour les données à transmettre correspondant aux valeurs de luminance et aux valeurs de différence de couleur ;
  caractérisé en ce que les moyens pour réguler comportent en outre :
- des moyens (38, 40) pour déterminer le coût de codage des coefficients et des différences de coefficients de transformation ;
- des moyens (15) pour calculer la quantité d'informations transmises ;
- des moyens (14) pour calculer la quantité d'informations à transmettre, à partir des coûts de codage et à partir de la quantité d'informations transmises ;
- des moyens de calcul (8) pour déterminer un coefficient de quantification et un coefficient de pondération à partir de la quantité d'informations à transmettre, le coefficient de pondération étant fonction aussi du rang de chaque coefficient de transformation, ou différence de coefficients de transformation.

**10.** Dispositif selon la revendication 9, pour la mise en oeuvre du procédé selon la revendication 2, caractérisé en ce que les moyen de calcul pour déterminer un coefficient de quantification et un coefficient de pondération comportent en outre ;
- des premiers moyens (16) pour calculer la luminance moyenne dans une pluralité de zones situées à la périphérie de chaque bloc d'éléments d'image, à partir de la suite des valeurs de luminance représentatives de ce bloc d'élément d'image ;
- des deuxièmes moyens (17) pour calculer, pour chaque bloc d'éléments d'image, la valeur minimale parmi les valeurs moyennes de luminance calculées par les premiers moyens (16) ;
- des troisièmes moyens (18, 8) pour comparer cette valeur minimale à une pluralité de valeurs de seuil prédéterminées ; pour attribuer le bloc à une classe en fonction du résultat de ces comparaisons ; et pour en déduire un coefficient de pondération et un coefficient de quantification en fonction de la classe ainsi déterminée.

**11.** Dispositif de décodage d'une suite d'image, par transformation, pour la mise en oeuvre du procédé selon la revendication 1, chaque bloc d'éléments d'image étant représenté par un bloc de valeurs de luminance, un bloc de valeurs de différence de couleur rouge et un bloc de différence de couleur bleue, qui sont codés sous la forme de coefficients ou de différences de coefficients de transformation, comportant :
- des moyens (60, 70 à 73, 95, 96) pour stocker les données à décoder, comportant une mémoire (60) commune pour les données à décoder correspondant aux valeurs de luminance et aux valeurs de différence de couleur ;
- des moyens de décodage (74, 80, 81, 90 à 93), pour multiplier les coefficients ou les différences de coefficients de chaque bloc, par un coefficient dit de pondération inverse et par un coefficient dit de quantification inverse ; pour calculer un coefficient de transformation à partir de chaque différence de coefficients de transformation ; et pour calculer un bloc de valeurs de luminance,

25

respectivement de différence de couleur, à partir d'un bloc de coefficients de transformation ;

caractérisé en ce que les moyens de décodage comportent des moyens (90 à 93, 74) pour calculer une valeur de coefficient de quantification inverse, respectivement de pondération inverse, identique à une constante multiplicative près, pour la luminance et pour les différences de couleur, ces derniers moyen comportant ;

- des moyens (92) pour calculer la quantité d'informations reçue par le dispositif de décodage ;
- des moyens (90, 91) pour calculer la quantité d'informations restant à décoder, à partir de la quantité d'informations reçue par le dispositif de décodage et à partir de la quantité d'informations lue dans la mémoire tampon (60) ;
- des moyens (74) pour calculer une valeur de coefficient de quantification inverse et une valeur de coefficient de pondération inverse à partir de la quantité d'informations restant à décoder, chaque coefficient de pondération inverse étant fonction en outre du rang de chaque coefficient ou différence de coefficients de transformation.

**12.** Dispositif de décodage selon la revendication 11, pour la mise en oeuvre du procédé selon la revendication 2, caractérisé en ce que les moyens (90 à 93, 74) pour calculer une valeur de coefficient de quantification et une valeur de coefficient de pondération comportent en outre un décodeur (93) pour décoder un mot binaire accompagnant les données codées correspondant à chaque bloc d'éléments d'image, ce mot traduisant la difficulté de codage du bloc ; et en ce que lesdits moyens (90 à 93, 74) calculent les valeurs de ces coefficients en fonction aussi de la valeur de ce mot binaire.

## Claims

**1.** Adaptive process for encoding and decoding a series of images by transformation, the encoding consisting in:

- dividing each image into blocks of pixels, each block being represented by a block of luminance values, a block of blue colour-difference values and a block of red colour-difference values;
- applying a two-dimensional transformation to each block of values in order to obtain a block of transformation coefficients of the block of values under consideration;
- transmitting, for each block of values, either the value of the transformation coefficients of the block, or the difference in value of these transformation coefficients, with respect to the value of the transformation coefficients of a homologous block in the image preceding the image being encoded, in such a way as to minimize the volume of data to be transmitted for the block under consideration, the encoding being referred to as intra-image or inter-image, respectively;
- multiplying each transformation coefficient or each difference in transformation coefficients by a factor, namely a weighting factor, which is a function of the rank-order of this transformation coefficient or this difference in transformation coefficients;
- controlling the flow of the transmitted data by storing them in the same buffer memory, the data to be transmitted corresponding to three types of data blocks, and by multiplying the transformation coefficients of the 3 types of blocks by a factor, namely a quantization factor, which varies in relation to the volume of data to be transmitted;

the encoding for each block consisting in:

- multiplying each transmitted transformation coefficient value or each transmitted transformation coefficient difference value by a factor that is equal to the inverse of the weighting factor used for encoding and by a coefficient that is equal to the inverse of the quantization factor used for encoding;
- adding to each transformation coefficient difference value the value of a transformation coefficient that is homologous to the coefficient under consideration in a block that is homologous to the block under consideration and which belongs to the preceding image being decoded;
- applying to each transformation coefficient a transformation that is the inverse of the transformation applied for encoding, in order to obtain a block of data representing a portion of the decoded image;

characterised in that, in order to control the flow, the weighting factor can also be varied in relation to the volume of data to be transmitted, in such a way as to reduce the weight given to the coefficients and to the coefficient differences corresponding to the high spatial frequencies when the volume of data to be transmitted increases.

**2.** Process according to claim 1, characterised in that, in addition, it consists in calculating the average luminance in a number of zones situated at the periphery of each block of pixels; and in determining for each block the minimum value of these average values; and in that the weighting factor and the quantization factor of each block are also variable in relation to the minimum luminance that is determined in this manner.

3. Process according to claim 1, consisting, in addition, in encoding the transformation coefficient values that are other than zero, or the transformation coefficient difference values, before transmitting them, by means of Huffmann codes; and in encoding in bands the zero values of the transformation coefficients or transformation coefficient differences, except for the last band; the coefficients or coefficient differences being considered in succession according to a predetermined scanning order, and the length of the bands being encoded by means of a Huffmann code; characterised in that, in addition, it consists in using for the luminance values and the colour-difference values, respectively, four distinct Huffmann codes for:
   - the values other than zero of coefficients that are not preceded by at least one zero value in the coefficient scanning order;
   - the values other than zero of the coefficient differences that are not preceded by at least one zero value in the coefficient difference scanning order;
   - the values other than zero of coefficients that are preceded by at least one zero value in the coefficient difference scanning order;
   - the values other than zero of the coefficient differences that are preceded by at least one zero value in the coefficient difference scanning order.

4. Process according to claim 1, consisting, in addition, in assigning intra-image encoding to certain blocks, although it results in higher encoding costs than inter-image encoding for these blocks, in order to limit the propagation of errors, characterised in that it consists in assigning intra-image encoding to a given block when the relative difference in the cost of inter-image encoding and the cost of intra-image encoding is below a first threshold value, or even when the given block has not been encoded by intra-image encoding for a number of images $N(i, j)$ is above a second fixed threshold value.

5. Process according to claim 4, characterised in that the first threshold value is variable and decreases in relation to the number of images $N(i, j)$ since which the block under consideration has not been encoded by intra-image encoding.

6. Process according to claim 4, characterised in that in order to distribute the assigned intra-image encoding over time, in addition, it consists in assigning intra-image encoding only to successive blocks separated by an interval that is greater than a third, fixed threshold value.

7. Process according to claim 1, characterised in that, in addition, it consists in inserting between the encoded data corresponding to two consecutive images a number of words, namely image-separation words, each of which contains a fixed synchronization word which is not matched by any of the permissible concatenations of the encoded data, and a binary word which translates the rank-order of the separating word under consideration, the modulo being a fixed number.

8. Process according to claim 1, characterised in that, in addition, it consists in inserting between the encoded data corresponding to two consecutive blocks a binary word, namely an inter-block separator, containing a fixed synchronization word which is not matched by any of the permissible concatenations of the encoded data; a binary word translating the rank-order of the following block, the modulo being a fixed number; and a binary word translating the rank-order sum of the following block and the number of events represented by the encoded data of the following block, the modulo being a fixed number.

9. Device for encoding a series of images by transformation to implement the process according to claim 1, each pixel being represented by a luminance value, a red colour-difference value and a blue colour-difference value, comprising:
   - encoding means (6, 7) for calculating a block of transformation coefficients or transformation coefficient differences, for each block of luminance values and for each block of colour-difference values; and for multiplying these coefficients and these coefficient differences by a factor, namely a weighting factor, and by a factor, namely a quantization factor, the first being a function of the rank-order of the coefficient, or of the difference of the transformation coefficients in its block, and the second being identical for all the coefficients or coefficient differences of a block, and being a function of the volume of data to be transmitted;

- means for controlling the volume of data to be transmitted, comprising a shared memory (9) for the data to be transmitted corresponding to the luminance values and the colour-difference values;

characterised in that the controlling means comprise, in addition:

- means (38, 40) for determining the cost of encoding transformation coefficients and transformation coefficient differences;
- means (15) for calculating the volume of data transmitted;
- means (14) for calculating the volume of data to be transmitted, from encoding costs and from the volume of data transmitted;
- calculating means (8) for determining a quantization factor and a weighting factor from the volume of data to be transmitted, the weighting factor also being a function of the rank-order of each transformation coefficient, or transformation coefficient difference.

10. Device according to claim 9, for implementing the process according to claim 2, characterised in that the calculating means for determining a quantization factor and a weighting factor comprise, in addition:

- first means (16) for calculating the average luminance in a number of zones situated at the periphery of each block of pixels, from the series of representative luminance values of this block of pixels;
- second means (17) for calculating for each block of pixels the minimum value of the average luminance values calculated by the first means (16);
- third means (18, 8) for comparing this minimum value with a number of predetermined threshold values; to attribute the block to a class in relation to the result of these comparisons; and to deduce from it a weighting factor and a quantization factor in relation to the class that is determined in this manner.

11. Device for decoding a series of images by transformation, for implementing the process according to claim 1, each block of pixels being represented by a block of luminance values, a block of red colour-difference values and a block of blue colour-difference values, which are encoded in the form of transformation coefficients or transformation coefficient differences, containing:

- means (60, 70 to 73, 95, 96) for storing the data to be decoded, containing a shared memory (60) for data to be decoded corresponding to the luminance values and to the colour-difference values;
- decoding means (74, 80, 81, 90 to 93), for multiplying the coefficients or the coefficient differences of each block by a factor, namely an inverse weighting factor, and by a factor, namely an inverse quantization factor; for calculating a transformation coefficient from each transformation coefficient difference; and for calculating a block of luminance values and colour-difference values, respectively, from a block of transformation coefficients;

characterised in that the decoding means contain means (90 to 93, 74) for calculating an inverse quantization and an inverse weighting factor, respectively, identical to a close multiplication constant, for the luminance and for the colour-differences, the latter containing:

- means (92) for calculating the volume of data received by the decoding device;
- means (90, 91) for calculating the remaining volume of data to be decoded, from the volume of data received by the decoding device and from the volume of data read into the buffer memory (60);
- means (74) for calculating an inverse quantization factor value and an inverse weighting factor value from the remaining volume of data to be decoded, each inverse weighting factor, in addition, being a function of the rank-order of each coefficient or transformation coefficient difference.

12. Decoding device according to claim 11, for implementing the process according to claim 2, characterised in that the means (90 to 93, 74) for calculating a quantization factor value and a weighting factor value contain, in addition, a decoder (93) for decoding a binary word accompanying the encoded data corresponding to each block of pixels, this word translating the difficulty of decoding the block; and in that the said means (90 to 93, 74) also calculate the values of these factors in relation to the value of this binary word.

**Patentansprüche**

1. Adaptives Verfahren zum Codieren und Decodieren einer Folge von Bildern durch Transformation, wobei die Codierung darin besteht, daß:
   - jedes Bild in Blöcke von Bildelementen unterteilt wird, wobei jeder Block durch einen Block von Luminanzwerten, einen Block von Differenzwerten für die Farbe Blau und einen Block von Differenzwerten für die Farbe Rot dargestellt wird;
   - auf jeden Block von Werten eine zweidimensionale Transformation Anwendung findet, um einen Block von Transformationskoeffizienten für den betrachteten Werteblock zu gewinnen;
   - für jeden Block von Werten entweder der Wert der Transformationskoeffizienten des Blocks oder die Wertdifferenz dieser Transformationskoeffizienten, bezogen auf den Wert der Transformationskoeffizienten eines entsprechenden Blocks in dem Bild, welches dem im Vorgang der Codierung befindlichen Bild vorausgeht, übertragen wird, so daß die Menge von für den betrachteten Block zu übertragenden Informationen minimiert wird, wobei die Codierung im ersteren Fall als Intra-Bild-Codierung und im zweiten Fall als Inter-Bild-Codierung bezeichnet wird;
   - jeder Transformationskoeffizient oder jede Differenz von Transformationskoeffizienten mit einem sogenannten Wichtungskoeffizient multipliziert wird, der von der Ordnungszahl dieses Transformationskoeffizienten bzw. dieser Differenz von Transformationskoeffizienten abhängt;
   - der Durchsatz von übertragenen Informationen reguliert wird, indem die zu übertragenden Informationen, die den drei Arten von Werteblöcken entsprechen, in demselben Pufferspeicher abgespeichert werden und indem Transformationskoeffizienten sowie die Differenzen von Transformationskoeffizienten der drei Typen von Blöcken mit einem sogenannten Quantisierungskoeffizienten multipliziert werden, der in Abhängigkeit von der Menge der zu übertragenden Informationen variabel ist;

   wobei die Decodierung für jeden Block darin besteht, daß:
   - jeder übertragene Wert eines Transformationskoeffizienten bzw. jeder übertragene Wert einer Differenz von Transformationskoeffizienten mit einem Koeffizienten, der gleich dem Kehrwert des für die Codierung verwendeten Wichtungskoeffizienten ist, und mit einem Koeffizienten, der gleich dem Kehrwert des für die Codierung verwendeten Quantisierungskoeffizienten ist, multipliziert wird;
   - zu dem Wert jeder Differenz von Transformationskoeffizienten der Wert eines Transformationskoeffizienten hinzuaddiert wird, der dem betrachteten Koeffizient in einem Block entspricht, der seinerseits dem betrachteten Block entspricht, und der zu demjenigen Bild gehört, welches dem Bild vorausgeht, das gerade decodiert wird;
   - auf jeden Transformationskoeffizienten eine Transformation Anwendung findet, die invers zu der für die Codierung verwendeten Transformation ist, um einen Block von Werten zu gewinnen, die einen decodierten Bildteil darstellen;

   dadurch gekennzeichnet, daß zur Regulierung des Durchsatzes der Wichtungskoeffizient auch in Abhängigkeit von der Menge von zu übertragenden Informationen variabel ist, in solcher Weise, daß die Wichtung, mit der die Koeffizienten und die Differenzen von Koeffizienten, die hohen räumlichen Frequenzen entsprechen, behaftet werden, vermindert wird, wenn die Menge von zu übertragenden Informationen zunimmt.

2. Verfahren nach Anspruch 1, dadurch gekennzeichnet, daß ferner die mittlere Luminanz in mehreren Zonen berechnet wird, die am Rand jedes Blocks von Bildelementen liegen; und daß für jeden Block der minimale Wert unter diesen Mittelwerten bestimmt wird; und daß der Wichtungskoeffizient und der Quantisierungskoeffizient jedes Blocks auch in Abhängigkeit von der so bestimmten minimalen Luminanz variabel sind.

3. Verfahren nach Anspruch 1, welches ferner in folgendem besteht: die nicht verschwindenden Werte von Transformationskoeffizienten oder Differenzen von Transformationskoeffizienten werden, bevor sie übertragen werden, mittels Huffmann-Codes codiert; und es erfolgt eine Codierung mit Bereichen von Nullwerten für Transformationskoeffizienten oder Differenzen von Transformationskoeffizienten, außer bei dem letzten Bereich; wobei die Koeffizienten oder die Differenzen von Koeffizienten nacheinander in einer vorbestimmten Abtastreihenfolge berücksichtigt werden und die Länge der Bereiche mit einem Huffmann-Code codiert wird; dadurch gekennzeichnet, daß ferner für die Luminanzwerte bzw. für die Farbdifferenzwerte vier verschiedene Huffmann-Codes verwendet werden für:
   - die nichtverschwindenden Werte von Koeffizienten, denen nicht wenigstens ein Nullwert vorausgeht, in der Reihenfolge der Abtastung der Koeffizienten;
- die nichtverschwindenden Werte von Differenzen von Koeffizienten, denen nicht wenigstens ein Nullwert vorausgeht, in der Reihenfolge der Abtastung der Koeffizientendifferenzen;
- die nichtverschwindenden Werte von Koeffizienten, denen wenigstens ein Nullwert vorausgeht, in der Reihenfolge der Abtastung der Koeffizientendifferenzen;
- die nichtverschwindenden Werte von Koeffizientendifferenzen, denen wenigstens ein Nullwert vorausgeht, in der Reihenfolge der Abtastung der Koeffizientendifferenzen.

4. Verfahren nach Anspruch 1, bei welchem ferner die Intra-Bild-Codierung für bestimmte Blöcke aufgezwungen wird, obwohl sie einen höheren Codieraufwand als die Inter-Bild-Codierung für diese Blöcke ergibt, um die Ausbreitung von Fehlern einzuschränken, dadurch gekennzeichnet, daß die Intra-Bild-Codierung für einen gegebenen Block aufgezwungen wird, wenn die relative Differenz des Codieraufwandes zwischen der Inter-Bild-Codierung und der Intra-Bild-Codierung kleiner als ein erster Schwellwert ist oder wenn der gegebene Block seit einer Anzahl von Bildern N(i, j), die größer als ein zweiter festgelegter Schwellwert ist, nicht mit einer Intra-Bild-Codierung codiert wurde.

5. Verfahren nach Anspruch 4, dadurch gekennzeichnet, daß der erste Schwellwert variabel ist und in Abhängigkeit von der Anzahl von Bildern N(i, j), seit welchem der betrachtete Block nicht mit einer Intra-Bild-Codierung codiert wurde, abnimmt.

6. Verfahren nach Anspruch 4, dadurch gekennzeichnet, daß zur zeitlichen Aufteilung der erzwungenen Intra-Bild-Codierungen ferner eine Intra-Bild-Codierung nur für solche aufeinanderfolgende Blöcke aufgezwungen wird, die um ein Intervall, das größer als ein dritter fester Schwellwert ist, auseinanderliegen.

7. Verfahren nach Anspruch 1, dadurch gekennzeichnet, daß ferner zwischen den codierten Daten, die zwei aufeinanderfolgenden Bildern entsprechen, mehrere sogenannte Bildseparatorwörter eingefügt werden, die jeweils ein festes Muster enthalten, das durch alle erlaubten Verkettungen von codierten Daten nicht nachgeahmt werden kann, und ein Binärwort eingefügt wird, das die Ordnungszahl des betrachteten Separators Modulo eine feste Zahl wiedergibt.

8. Verfahren nach Anspruch 1, dadurch gekennzeichnet, daß ferner zwischen den codierten Daten, die zwei aufeinanderfolgenden Blöcken entsprechen, ein sogenanntes Inter-Block-Separator-Binärwort eingefügt wird, welches ein festes Muster enthält, das durch alle erlaubten Verkettungen von codierten Daten nicht nachgeahmt werden kann; ein Binärwort, welches die Ordnungszahl des darauffolgenden Blockes Modulo eine feste Zahl wiedergibt; und ein Binärwort, welches die Summe der Ordnungszahl des darauffolgenden Blocks und der Anzahl von durch die codierten Daten des darauffolgenden Blocks darstellenden Ereignissen Modulo eine feste Zahl wiedergibt.

9. Vorrichtung zur Codierung einer Folge von Bildern durch Transformation, zur Durchführung des Verfahrens nach Anspruch 1, wobei jedes Bildelement durch einen Luminanzwert, einen Rot-Farbdifferenzwert und einen Blau-Farbdifferenzwert dargestellt wird, mit:
- Codiermitteln (6, 7) zum Berechnen eines Blocks von Transformationskoeffizienten oder Differenzen von Transformationskoeffizienten für jeden Block von Luminanzwerten und für jeden Block von Farbdifferenzwerten; und zum Multiplizieren dieser Koeffizienten und dieser Differenzen von Koeffizienten mit einem sogenannten Wichtungskoeffizienten und mit einem sogenannten Quantisierungskoeffizienten, wobei ersterer von der Ordnungszahl des Koeffizienten oder von der Differenz von Transformationskoeffizienten in seinem Block abhängt, während der zweite für alle Koeffizienten oder Differenzen von Koeffizienten eines Blocks gleich ist und von der Menge der zu übertragenden Informationen abhängt;
- Mittel zum Regulieren der Menge von zu übertragenden Informationen, mit einem gemeinsamen Speicher (9) für die zu übertragenden Daten, die den Luminanzwerten und den Farbdifferenzwerten entsprechen;
dadurch gekennzeichnet, daß die Mittel zum Regulieren ferner umfassen:
- Mittel (38, 40), um den Codieraufwand für die Transformationskoeffizienten und -koeffizientendifferenzen zu bestimmen;
- Mittel (15), um die Menge der übertragenen Informationen zu berechnen;
- Mittel (14) zum Berechnen der Menge von zu übertragenden Informationen ausgehend von dem

30

Codieraufwand und ausgehend von der Menge der übertragenen Informationen;

- Rechenmittel (8), um einen Quantisierungskoeffizienten und einen Wichtungskoeffizienten ausgehend von der Menge der zu übertragenden Informationen zu bestimmen, wobei der Wichtungskoeffizient auch von der Ordnungszahl jedes Transformationskoeffizienten bzw. Transformationsdifferenzkoeffizienten abhängt.

10. Vorrichtung nach Anspruch 9, für die Durchführung des Verfahrens nach Anspruch 2, dadurch gekennzeichnet, daß die Rechenmittel zur Bestimmung eines Quantisierungskoeffizienten und eines Wichtungskoeffizienten ferner umfassen:

- erste Mittel (16), um die mittlere Luminanz in mehreren Zonen zu berechnen, die am Rand jedes Blocks von Bildelementen liegen, ausgehend von der Folge von Luminanzwerten, die diesen Block von Bildelementen darstellen;
- zweite Mittel (17), um für jeden Block von Bildelementen den minimalen Wert unter den mittleren Luminanzwerten zu berechnen, die durch die ersten Mittel (16) berechnet wurden;
- dritte Mittel (18, 8), um diesen Minimalwert mit mehreren vorbestimmten Schwellwerten zu vergleichen; um den Block einer Klasse in Abhängigkeit vom Ergebnis dieser Vergleichsvorgänge zuzuweisen; und um daraus einen Wichtungskoeffizienten und einen Quantisierungskoeffizienten in Abhängigkeit von der so bestimmten Klasse abzuleiten.

11. Vorrichtung zum Decodieren einer Folge von Bildern durch Transformation, zur Durchführung des Verfahrens nach Anspruch 1, wobei jeder Block von Bildelementen durch einen Block von Luminanzwerten, einen Block von Rot-Farbdifferenzwerten und einen Block von Blau-Farbdifferenzwerten dargestellt wird, die in Form von Transformationskoeffizienten bzw. von Transformationsdifferenzkoeffizienten codiert werden, mit:

- Mitteln (60, 70 bis 73, 95, 96) zum Speichern der zu decodierenden Daten, mit einem gemeinsamen Speicher (60) für die zu decodierenden Daten, die den Luminanzwerten und den Farbdifferenzwerten entsprechen;
- Decodiermitteln (74, 80, 81, 90 bis 93) zum Multiplizieren der Koeffizienten bzw. der Differenzkoeffizienten jedes Blocks mit einem sogenannten inversen Wichtungskoeffizienten und einem sogenannten inversen Quantisierungskoeffizienten; zur Berechnung eines Transformationskoeffizienten ausgehend von jeder Differenz von Transformationskoeffizienten; und zur Berechnung eines Blocks von Luminanzwerten bzw. von Farbdifferenzwerten ausgehend von einem Block von Transformationskoeffizienten;

dadurch gekennzeichnet, daß die Decodiermittel Mittel (90 bis 93, 74) enthalten, um einen Koeffizientenwert für inverse Quantisierung bzw. für inverse Wichtung zu berechnen, der bis auf eine Multiplikationskonstante derselbe für die Luminanz wie für die Farbdifferenzen ist, wobei letztere Mittel enthalten:

- Mittel (92) zum Berechnen der Menge von durch die Decodiervorrichtung empfangenen Informationen;
- Mittel (90, 91) zum Berechnen der Menge der noch zu decodierenden Informationen ausgehend von der durch die Decodiervorrichtung empfangenen Informationsmenge und von der aus dem Pufferspeicher (60) ausgelesenen Informationsmenge;
- Mittel (74) zum Berechnen eines Koeffizientenwertes für inverse Quantisierung und eines Koeffizientenwertes für inverse Wichtung ausgehend von der noch zu decodierenden Informationsmenge, wobei jeder Koeffizient für inverse Wichtung ferner von der Ordnungszahl jedes Transformationskoeffizienten bzw. Transformationsdifferenzkoeffizienten abhängt.

12. Decodiervorrichtung nach Anspruch 11, zur Durchführung des Verfahrens nach Anspruch 2, dadurch gekennzeichnet, daß die Mittel (90 bis 93, 74) zur Berechnung eines Quantisierungs-Koeffizientenwertes und eines Wichtungs-Koeffizientenwertes ferner einen Decodierer (93) umfassen, um ein Binärwort zu decodieren, welches die codierten Daten begleitet, die jedem Block von Bildelementen entsprechen, wobei dieses Wort die Codierschwierigkeit für den Block wiedergibt; und daß diese Mittel (90 bis 93, 74) die Werte dieser Koeffizienten auch in Abhängigkeit von dem Wert dieses Binärwortes berechnen.

FIG.1

FIG.2

FIG.3

FIG.4

QUANTITÉ D'INFORMATIONS A TRANSMETTRE

RANG DES COEFFICIENTS

FIG.5

QUANTITE D'INFORMATIONS A TRANSMETTRE

RANG DES COEFFICIENTS

FIG.6

QUANTITE D'INFORMATIONS A TRANSMETTRE

RANG DES COEFFICIENTS

# FIG.7

Sous-bloc n°1    n°2    n°3    n°4

n°12

n°5

n°11

n°6

n°10

n°7

n°9    n°8

# FIG.8

Zone n°1    n°2    n°3

n°12

n°4

n°11

n°5

n°10

n°6

n°9    n°8    n°7

SÉPARATEUR D'IMAGES RÉPÉTÉ 8 FOIS | DONNÉES CODÉES POUR LE BLOC N°1 | SÉPARATEUR INTER - BLOCS | DONNÉES CODÉES POUR LE BLOC N°2

RANG DU SÉPARATEUR

0 0 0 _ _ _ _ _ _ _ _ _ _ 0 1

16 BITS — 3 BITS

RANG DU BLOC + NOMBRE D'ÉVÈNEMENTS MODULO 4

RADICAL | RANG DU BLOC MODULO 4 |

0 0 0 _ _ _ _ _ _ 0 1 |

11 BITS — 2 BITS — 2 BITS

FIG.9

INTER/INTRA    INTER/INTRA    INTER/INTRA

CLASSE

SÉPA-RATEUR INTRA BLOC    SÉPA-RATEUR INTRA BLOC

DONNÉES ROUGE    DONNÉES BLEU    DONNÉES LUMINANCE

3 BITS    NOMBRE DE BITS VARIABLE    1 BIT    1 BIT

1 BIT

EP 0 323 362 B1

FIG.10

EP 0 323 362 B1

FIG.11

FIG.12

EP 0 323 362 B1

FIG.13

MOYENS DE DÉCODAGE
DE LA LUMINANCE.